(19) Europäisches Patentamt
European Patent Office
Office européen des brevets

(11) **EP 3 831 898 A1**

(12) **EUROPEAN PATENT APPLICATION**
published in accordance with Art. 153(4) EPC

(43) Date of publication:
**09.06.2021 Bulletin 2021/23**

(51) Int Cl.:
*C09D 143/04* (2006.01)    *B05D 5/00* (2006.01)
*B05D 7/24* (2006.01)    *B32B 27/00* (2006.01)
*B32B 27/30* (2006.01)    *C09D 5/16* (2006.01)
*C09D 133/14* (2006.01)

(21) Application number: **19841605.9**

(22) Date of filing: **25.07.2019**

(86) International application number:
**PCT/JP2019/029220**

(87) International publication number:
**WO 2020/022431 (30.01.2020 Gazette 2020/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **27.07.2018 JP 2018141778**

(71) Applicant: **Chugoku Marine Paints, Ltd.**
**Hiroshima 739-0652 (JP)**

(72) Inventors:
• **HARADA, Shotaro**
  **Otake-shi, Hiroshima 739-0652 (JP)**
• **IKADAI, Junnai**
  **Otake-shi, Hiroshima 739-0652 (JP)**

(74) Representative: **Hoffmann Eitle**
**Patent- und Rechtsanwälte PartmbB**
**Arabellastraße 30**
**81925 München (DE)**

(54) **ANTIFOULING PAINT COMPOSITION, ANTIFOULING COATING, SUBSTRATE WITH ANTIFOULING COATING, ?PRODUCTION METHOD THEREOF, AND REPAIR METHOD**

(57) An object is to provide an antifouling coating composition capable of forming an antifouling coating film that can retain the appearance demanded for the coating film and is excellent in long-term antifouling property even though the antifouling coating composition is coated directly on an aged antifouling coating film including a fragile layer, from which the antifouling agent component has been eluted due to the long-term exposure to water, an antifouling coating film, a substrate with an antifouling coating film and a method for producing the same, and a repair method of the aged antifouling coating film. The antifouling coating composition of the present invention is an antifouling coating composition containing a silyl ester copolymer (A) having a constitutional unit derived from triisopropylsilyl methacrylate (a1) and a constitutional unit derived from an ethylenically unsaturated monomer other than triisopropylsilyl methacrylate (a1) and having a solid content acid value of 0.1 to 10 mgKOH/g, and a rosin compound and/or a monocarboxylic acid compound (B), a content of the rosin compound and/or monocarboxylic acid compound (B) being 100 parts by mass or less per 100 parts by mass of the solid content of the silyl ester copolymer (A).

EP 3 831 898 A1

**Description**

Technical Field

The present invention relates to an antifouling coating composition, and more specifically relates to an antifouling coating composition that is effective for antifouling of a surface of a substrate exposed to water, an antifouling coating film that is formed with the antifouling coating composition, a substrate with the antifouling coating film and a method for producing the same, and a repair method of an aged antifouling coating film.

Background Art

Various aquatic organisms (for example, animals, such as oysters, mussels, and barnacles, plants, such as black seaweed and sea lettuce, and bacteria) tend to adhere to surfaces of substrates (for example, marine vessels, fishing nets, and various aquatic structures) exposed to water under the natural environment (for example, seas, rivers, and lakes) for a long period of time. The adhesion of aquatic organisms on the surface of the substrate impairs the appearance and causes various problems. For example, in the case where the substrate is a marine vessel, the resistance against water flow may be increased to cause the decrease of the marine vessel speed and the increase of the fuel consumption in some cases. In the case where the substrate is an aquatic structure, the anticorrosion coating film coated on the surface of the substrate may be damaged to cause the possibility of damages, such as the decrease of the strength and the function and the considerable decrease of the lifetime. In the case where the substrate is a fish net, such as an aquaculture net and a fixed net, the mesh may be clogged with the aquatic organisms to cause critical problems, such as anoxia lethal of the cultured organisms and the caught organisms, in some cases. Furthermore, aquatic organisms adhering to and growing on a water supply and drainage pipe of a factory, a thermal or atomic power plant, or the like may be a factor clogging the water supply and drainage pipe and decreasing the flow rate in some cases.

For preventing the adhesion of aquatic organisms causing the problems, in general, an antifouling paint is coated on the surface of the substrate to form an antifouling coating film. In the antifouling paint, a hydrolysis type antifouling paint has been widely used due to the advantages including the excellent antifouling property exhibited thereby, and as one example thereof, an antifouling paint containing a silyl ester copolymer has been developed.

PTL 1 describes a copolymer of tributylsilyl methacrylate, methacrylic acid, and another polymerizable monomer. The literature describes that the copolymer undergoes hydrolysis at an appropriate rate, and can provide an antifouling coating material excellent in antifouling property without the use of an organic tin compound influencing the environment.

PTL 2 describes an organic silyl group-containing copolymer of an organic silyl ester group-containing polymerizable monomer containing triisopropylsilyl acrylate, 2-methoxyethyl methacrylate, and acrylic acid. The literature describes that the copolymer can provide a coating composition excellent in coating film consumption property, recoatability, and prevention of adhesion of marine organisms during the outfitting time, without the occurrence of defects, such as cracks and exfoliation.

PTL 3 describes a copolymer of triisopropylsilyl (meth)acrylate, methoxyethyl acrylate, and an alkyl (meth)acrylate as another polymerizable monomer. The literature describes that the copolymer is excellent in storage stability, and can provide a coating composition capable of providing a coating film excellent in flexibility and long-term antifouling property, formed by coating the coating composition even after storing.

PLT 4 describes a copolymer of triisopropylsilyl (meth)acrylate, methyl methacrylate, and 2-methoxyethyl (meth)acrylate or the like as another (meth)acrylate ester. The literature describes that the antifouling coating composition containing the copolymer exhibits, in seawater, stable solubility and good antifouling effect from the initial stage, and can form a coating film excellent in water resistance capable of effectively exhibiting the antifouling effect for a long period of time.

PTL 5 describes an antifouling coating composition containing a copolymer of triisopropylsilyl methacrylate, 2-methoxyethyl (meth)acrylate, and another polymerizable monomer, and trimethylisobutenylcyclohexenecarboxylic acid. The antifouling coating composition can provide an antifouling coating film excellent in long-term antifouling property, long-term water resistance, and crack resistance on exposure to sunlight for a long period of time.

Citation List

Patent Literatures

PTL 1: JP 1-146808 A
PTL 2: JP 10-30071 A

PTL 3: JP 2001-226440 A
PTL 4: JP 2011-26357 A
PTL 5: JP 2016-216651 A

Summary of Invention

Technical Problem

An ordinary antifouling paint used for preventing the adhesion of aquatic organisms exhibits the antifouling property through dissolution of the antifouling agent component contained in the antifouling coating film formed with the antifouling paint, gradually dissolve in water. The antifouling coating film, from which the antifouling agent component has been dissolved out, after elapsing a certain period of time (aged antifouling coating film) becomes a coating film that has a fragile layer having fine pores therein (fragile layer). For retaining the antifouling property of the aged antifouling coating film, it is necessary to recoat the antifouling paint to form again the antifouling coating film containing the antifouling agent component (repair coating).
The antifouling paint used for the repair coating has been demanded that the fresh antifouling paint can be coated on the aged antifouling coating film without removing of the aged antifouling coating film or coating a paint enhancing the adhesion to the base, from the standpoint of the cost and the operation.
It has been known as described above that the antifouling paint containing a copolymer having a constitutional unit derived from triisopropylsilyl methacrylate provides an antifouling coating film excellent in storage stability, long-term antifouling property, long-term water resistance, and the like. However, in the case where the antifouling paint is coated directly on an aged coating film having a fragile layer on the surface thereof, there is a problem that the binder component in the antifouling paint migrates to the aged antifouling coating film (i.e., the binder component is sucked by the fragile layer) to fail to exhibit the antifouling property sufficiently. Furthermore, there is also a problem that the resulting coating film is lusterless and inferior in appearance.
In view of the problems, an object of the present invention is to provide an antifouling coating composition capable of forming an antifouling coating film that can retain the appearance demanded for the coating film and is excellent in long-term antifouling property even though the antifouling coating composition is coated directly on an aged antifouling coating film including a fragile layer, from which the antifouling agent component has been eluted due to the long-term exposure to water. Another object of the present invention is to provide an antifouling coating film that is formed with the antifouling coating composition, a substrate with an antifouling coating film and a method for producing the same, and a repair method of the aged antifouling coating film.

Solution to Problem

As a result of the earnest investigations for solving the problem by the present inventors, it has been found that an antifouling coating composition containing a silyl ester copolymer (A) that has a triisopropylsilyl ester structure and has a solid content acid value in a particular range can solve the problems. Specifically, the present invention relates to the following items [1] to [19].

[1] An antifouling coating composition containing a silyl ester copolymer (A),
the silyl ester copolymer (A) having a solid content acid value of 0.1 to 10 mgKOH/g,
the silyl ester copolymer (A) having a constitutional unit derived from triisopropylsilyl methacrylate (a1) and a constitutional unit derived from an ethylenically unsaturated monomer other than triisopropylsilyl methacrylate (a1).
[2] The antifouling coating composition according to the item [1], wherein the antifouling coating composition further contains a rosin compound and/or a monocarboxylic acid compound (B), and a content of the rosin compound and/or monocarboxylic acid compound (B) is 100 parts by mass or less per 100 parts by mass of the solid content of the silyl ester copolymer (A).
[3] The antifouling coating composition according to the item [1] or [2], wherein a content of the constitutional unit derived from triisopropylsilyl methacrylate (a1) is 35 to 75 parts by mass per 100 parts by mass of the total constitutional units of the silyl ester copolymer (A).
[4] The antifouling coating composition according to any one of the items [1] to [3], wherein the silyl ester copolymer (A) has a constitutional unit derived from 2-methoxyethyl (meth)acrylate (a2) and a constitutional unit derived from an additional ethylenically unsaturated monomer (a3).
[5] The antifouling coating composition according to the item [4], wherein a content of the constitutional unit derived from 2-methoxyethyl (meth)acrylate (a2) is 15 to 35 parts by mass per 100 parts by mass of the total constitutional units of the silyl ester copolymer (A).
[6] The antifouling coating composition according to the item [4] or [5], wherein the additional ethylenically unsaturated monomer (a3) includes a monomer containing an acid group.

[7] The antifouling coating composition according to any one of the items [1] to [6], wherein the silyl ester copolymer (A) has a weight average molecular weight (Mw) of 12,000 or more.

[8] The antifouling coating composition according to any one of the items [1] to [7], wherein the antifouling coating composition further contains at least one kind selected from the group consisting of copper or a copper compound (C), an organic antifouling agent (D), an additional binder component (E), a coloring pigment (F), an extender pigment (G), a pigment dispersant (H), a plasticizer (I), an anti-sagging agent (J), an anti-settling agent (K), a dehydrating agent (L), and a solvent (M).

[9] The antifouling coating composition according to the item [8], wherein the antifouling coating composition contains the copper or copper compound (C), and a content of the copper or copper compound (C) in the solid content of the antifouling coating composition is 50% by mass or more.

[10] The antifouling coating composition according to the item [8] or [9], wherein the antifouling coating composition contains the dehydrating agent (L), and the dehydrating agent (L) is an alkoxysilane compound.

[11] The antifouling coating composition according to any one of the items [1] to [10], wherein the silyl ester copolymer (A) has a weight average molecular weight (Mw) of 12,000 or more and 25,000 or less.

[12] The antifouling coating composition according to any one of the items [1] to [11], wherein the antifouling coating composition is an antifouling coating composition for repairing an aged antifouling coating film that is for repairing an aged antifouling coating film.

[13] An antifouling coating film formed with the antifouling coating composition according to any one of the items [1] to [12].

[14] A laminated antifouling coating film including an aged antifouling coating film or an epoxy coating film (X), and an antifouling coating film (Y) formed with an antifouling coating composition (y), laminated on each other, the antifouling coating composition (y) containing a silyl ester copolymer (A),

the silyl ester copolymer (A) having a solid content acid value of 0.1 to 10 mgKOH/g,

the silyl ester copolymer (A) having a constitutional unit derived from triisopropylsilyl methacrylate (a1) and a constitutional unit derived from an ethylenically unsaturated monomer other than triisopropylsilyl methacrylate.

[15] A substrate with an antifouling coating film, including a substrate having provided on a surface of the substrate the antifouling coating film according to the item [13] or the laminated antifouling coating film according to the item [14].

[16] The substrate with an antifouling coating film according to the item [15], wherein the substrate has provided on the surface of the substrate an aged antifouling coating film, and the antifouling coating film provided on the aged antifouling coating film.

[17] A method for producing a substrate with an antifouling coating film, including the following steps (1-1) and (1-2), or the following steps (2-1) and (2-2):

(1-1) a step of coating or impregnating a surface of a substrate with the antifouling coating composition according to any one of the items [1] to [12], so as to provide a coated material or an impregnated material,
(1-2) a step of drying the coated material or the impregnated material obtained in the step (1-1), so as to provide an antifouling coating film,
(2-1) a step of drying the antifouling coating composition according to any one of the items [1] to [12], so as to provide an antifouling coating film, and
(2-2) a step of adhering the antifouling coating film obtained in the step (2-1) to a substrate.

[18] The method for producing a substrate with an antifouling coating film according to the item [17], wherein

the step (1-1) is a step of coating or impregnating a surface of a substrate having on a surface thereof an aged antifouling coating film, with the antifouling coating composition, so as to provide a coated material or an impregnated material, and

the step (2-2) is a step of adhering the antifouling coating film obtained in the step (2-1) on a substrate having on a surface thereof an aged antifouling coating film.

[19] A repair method of an aged antifouling coating film, including forming the antifouling coating film according to the item [13] on the aged antifouling coating film.

Advantageous Effects of Invention

The present invention can provide an antifouling coating composition capable of forming an antifouling coating film that can retain the appearance demanded for the coating film and is excellent in long-term antifouling property even though the antifouling coating composition is coated directly on an aged antifouling coating film including a fragile layer, from which the antifouling agent component has been eluted due to the long-term exposure to water. The present invention can also provide an antifouling coating film that is formed with the antifouling coating composition, a substrate with an antifouling coating film and a method for producing the same, and a repair method of the aged antifouling coating film.

Description of Embodiments

The antifouling coating composition, the antifouling coating film, the substrate with the antifouling coating film and the method for producing the same, and the repair method according to the present invention will be described in detail below.

In the description below, "(meth)acrylate", "(meth)acryloyl", and "(meth)acrylic acid" mean "acrylate or methacrylate", "acryloyl or methacryloyl", and "acrylic acid or methacrylic acid", respectively.

An ordinary antifouling paint used for preventing the adhesion of aquatic organisms exhibits the antifouling property through dissolution of the antifouling agent component contained in the antifouling coating film into water. After eluting the antifouling agent component from the antifouling coating film provided on the surface of the substrate exposed to water for a long period of time, the remaining antifouling coating film becomes a coating film (aged antifouling coating film) having a fragile layer having fine pores therein (fragile layer).

The antifouling coating composition of the present invention is capable of forming an antifouling coating film that can retain the appearance demanded for the coating film and is excellent in long-term antifouling property even though the antifouling coating composition is coated directly on the aged antifouling coating film. While the functional mechanism of the effect is not necessarily clear, a part thereof can be estimated as follows. Specifically, it is considered that the silyl ester copolymer (A) contained in the antifouling coating composition of the present invention is suppressed from migrating to the aged antifouling coating film since the copolymer (A) has an acid value within the particular range, and thereby the resulting antifouling coating film is excellent in antifouling property and is excellent in appearance with high glossiness even though the antifouling coating composition of the present invention is coated directly on an aged antifouling coating film.

[Antifouling Coating Composition]

The antifouling coating composition (which may be hereinafter referred simply to as a " coating composition ") of the present invention contains a silyl ester copolymer (A) having a constitutional unit derived from triisopropylsilyl methacrylate (a1) and a constitutional unit derived from an ethylenically unsaturated monomer other than triisopropylsilyl methacrylate (a1), and having a solid content acid value of 0.1 to 10 mgKOH/g.

<Silyl Ester Copolymer (A)>

The silyl ester copolymer (A) (which may be hereinafter referred simply to as a "copolymer (A)") in the present invention is a copolymer having a constitutional unit derived from triisopropylsilyl methacrylate (a1) and a constitutional unit derived from an ethylenically unsaturated monomer other than triisopropylsilyl methacrylate (a1), and the solid content acid value thereof is 0.1 to 10 mgKOH/g.

In the present invention, the "copolymer having a constitutional unit derived from X" means that the copolymer has a structure that is derived from the compound X in the state where the compound X is incorporated in the copolymer through polymerization reaction or the like.

(Constitutional Unit derived from Triisopropylsilyl Methacrylate (a1))

The silyl ester copolymer (A) has a structure derived from triisopropylsilyl methacrylate (a1) (which may be hereinafter referred simply to as "(a1)").

The content of the constitutional unit derived from the (a1) is preferably 35 to 75 parts by mass, more preferably 40 to 70 parts by mass, and further preferably 45 to 70 parts by mass, per 100 parts by mass of the total constitutional units of the copolymer (A), from the standpoint of the achievement of the antifouling coating film good in water resistance and antifouling property for a long period of time. In the case where the content of the constitutional unit derived from the (a1) is 45 to 70 parts by mass, in particular, the water resistance of the resulting antifouling coating film becomes excellent, and thus good crack resistance can be obtained.

While the copolymer (A) may have a moiety derived from a polymerization initiator at an end thereof in some cases, the content of the constitutional unit derived from the (a1) can be approximated by the proportion (mass ratio) in preparation of the (a1) in the total monomer components constituting the copolymer (A), which is the same as in the contents of the other constitutional units.

(Constitutional Unit derived from Ethylenically Unsaturated Monomer other than Triisopropylsilyl Methacrylate (a1))

The silyl ester copolymer (A) has, as a constitutional unit derived from a monomer copolymerized with the (a1), a constitutional unit derived from an ethylenically unsaturated monomer other than the (a1), and preferably has a constitutional unit derived from 2-methoxyethyl (meth)acrylate (a2) and a constitutional unit derived from an additional ethylenically unsaturated monomer (a3).

(Constitutional Unit derived from 2-Methoxyethyl (Meth)Acrylate (a2))

The silyl ester copolymer (A) preferably has a constitutional unit derived from 2-methoxyethyl (meth)acrylate (a2) (which may be hereinafter referred simply to as "(a2)"), from the standpoint of the further enhancement of the antifouling property of the antifouling coating film.
The (a2) means 2-methoxyethyl methacrylate and 2-methoxyethyl acrylate. Any one of 2-methoxyethyl methacrylate and 2-methoxyethyl acrylate may be used alone, or both of them may be used in combination, as the (a2).
The content of the constitutional unit derived from the (a2) is preferably 15 to 35 parts by mass, more preferably 20 to 35 parts by mass, and further preferably 20 to 30 parts by mass, per 100 parts by mass of the total constitutional units of the copolymer (A), from the standpoint of the achievement of the antifouling coating film having stable consumption property and antifouling property. In the case where the content of the constitutional unit derived from the (a2) is 20 to 30 parts by mass, in particular, the resulting antifouling coating film has appropriate hydrophilicity, and thus both the antifouling property and the crack resistance can be achieved simultaneously. The (a2) is preferably 2-methoxyethyl methacrylate from the aforementioned standpoint.
The gross content (total content) of the constitutional unit derived from the (a1) and the constitutional unit derived from the (a2) is preferably 60 to 99 parts by mass, more preferably 70 to 98 parts by mass, further preferably 75 to 95 parts by mass, and still further preferably 75 to 90 parts by mass, per 100 parts by mass of the total constitutional units of the copolymer (A), from the standpoint of the antifouling property and the physical properties of the antifouling coating film.

(Constitutional Unit derived from Additional Ethylenically Unsaturated Monomer (a3))

The silyl ester copolymer (A) preferably has a constitutional unit derived from an additional ethylenically unsaturated monomer (a3) (which may be hereinafter referred simply to as "(a3)").
The (a3) herein means an ethylenically unsaturated monomer other than the (a1) and the (a2), and is not particularly limited, as far as it is an ethylenically unsaturated monomer other than triisopropylsilyl methacrylate (a1) and 2-methoxyethyl (meth)acrylate (a2), and the oligomers and the polymers described later are excluded. The (a3) may be used alone or as a combination of two or more kinds thereof.
Examples of the additional ethylenically unsaturated monomer (a3) include an unsaturated carboxylic acid compound (a31), a (meth)acrylate compound (a32), a silyl (meth)acrylate compound (a33), a vinyl compound (a34), and a styrene compound (a35), and specific examples thereof are shown below.
Examples of the unsaturated carboxylic acid compound (a31) include (meth) acrylic acid, a (meth)acryloyloxyalkylsuccinic acid, a (meth)acrlyloyloxyalkylphthalic acid, a (meth)acryloyloxyalkylhexahydrophthalic acid, itaconic acid, and maleic acid.
Examples of the (meth)acrylate compound (a32) include an alkyl (meth)acrylate, such as methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate, 2-ethylhexyl (meth)acrylate, lauryl (meth)acrylate, tridecyl (meth)acrylate, and a stearyl (meth)acrylate, cyclohexyl (meth)acrylate, benzyl (meth)acrylate, isobornyl (meth)acrylate, glycidyl (meth)acrylate, tetrahydrofurfuryl (meth)acrylate, 2-hydroxyethyl (meth)acrylate, hydroxypropyl (meth)acrylate, hydroxybutyl (meth)acrylate, methoxytriethylene glycol (meth)acrylate, ethoxydiethylene glycol (meth)acrylate, and methoxydipropylene glycol (meth)acrylate.
Examples of the silyl (meth)acrylate compound (a33) include trimethylsilyl (meth)acrylate, triethylsilyl (meth)acrylate, and triisopropylsilyl acrylate.
Examples of the vinyl compound (a34) include vinyl acetate, vinyl propionate, vinylsulfonate, and vinylphosphonate.
Examples of the styrene compound (a35) include styrene and ammonium styrenesulfon ate.
Among these, the unsaturated carboxylic acid compound (a31), an alkyl (meth)acrylate, the vinyl compound (a34), and the like are preferred, (meth)acrylic acid, an alkyl (meth)acrylate having an alkyl group having 1 to 4 carbon atoms, vinylsulfonic acid, and the like are more preferred, and methyl methacrylate, butyl acrylate, (meth)acrylic acid, vinylsulfonic acid, and the like are particularly preferred.
The content of the constitutional unit derived from the (a3) is preferably 1 to 40 parts by mass, more preferably 2 to 30 parts by mass, further preferably 5 to 25 parts by mass, and still further preferably 10 to 25 parts by mass, per 100 parts by mass of the total constitutional units of the copolymer (A), from the standpoint of the control of the properties of the antifouling coating film.

(Constitutional Unit derived from Additional Component other than (a1), (a2), and (a3))

The copolymer (A) may have a structure derived from an additional component other than (a1), (a2), and (a3). Examples of the additional component other than (a1), (a2), and (a3) include an oligomer or polymer compound that has a polymerizable ethylenically unsaturated group at an end of the molecular chain thereof and is incorporated into the structure of the copolymer (A).
Examples the oligomer or polymer compound include a macromonomer compound, a silicone compound, and a polymer compound. Specific examples thereof are shown below.
Examples of the macromonomer compound include AA-6 (a trade name, produced by Toagosei Co., Ltd., polymethyl methacrylate having end methacryloyl group) and AS-6 (a trade name, produced by Toagosei Co., Ltd., polystyrene having end methacryloyl group).
Examples of the silicone compound include Silaplane FM-0711 (a trade name, produced by JNC Corporation, polydimethylsilicone having methacryloxy groups at one end) and KF-2012 (a trade name, produced by Shin-Etsu Chemical Co., Ltd., polydimethylsilicone having methacryloxy groups at one end).
Examples of the polymer compound include an alkyd resin having an unsaturated group.
The number average molecular weight of the oligomer or polymer compound is generally 500 to 30,000, and preferably 1,000 to 20,000. The oligomer or polymer compound may be used alone or as a combination of two or more kinds thereof.

(Solid Content Acid Value of Copolymer (A))

The copolymer (A) has a solid content acid value of 0.1 to 10 mgKOH/g. The "acid value" is the number of mg of potassium hydroxide that is required for neutralizing a free acid existing in 1 g of the specimen, and is expressed in terms of "mgKOH/g". The solid content acid value can be specifically measured by the method described in the examples.
In the case where the solid content acid value of the copolymer (A) is 0.1 mgKOH/g or more, the effects of the present invention can be exhibited. In the case where the solid content acid value of the copolymer (A) exceeds 10 mgKOH/g, the antifouling coating composition containing the copolymer (A) may be hard to coat due to the increased viscosity thereof in some cases, and a large amount of solvent that is necessary for controlling the viscosity may prevent addressing the environmental regulation in some cases. The solid content acid value of the copolymer (A) is preferably 1 to 10 mgKOH/g, and more preferably 1 to 8 mgKOH/g. In the case where the solid content acid value of the copolymer (A) is 1 mgKOH/g or more, the effects of the present invention can be further exhibited.
The acid group for imparting the acid value to the copolymer (A) is not particularly limited, examples of which include a carboxy group, a sulfonic acid group, and a phosphoric acid group, and among these, a carboxy group is preferred.
Examples of the method for introducing the acid group for imparting the acid value to the copolymer (A) include a method of copolymerizing a monomer having the acid group and a method of using a polymerization initiator or the like having the acid group, and the method is not limited thereto. The acid value of the copolymer (A) can be controlled to the target value, for example, by changing the kind and the amount of the component having the acid group incorporated into the structure of the copolymer (A). The method of copolymerizing a monomer having the acid group is preferred from the standpoint of the easy production of the copolymer having the target acid value.
The monomer having the acid group is preferably contained in the additional ethylenically unsaturated monomer (a3). Examples of the monomer having the acid group include an unsaturated carboxylic acid compound, vinylsulfonic acid, and vinylphosphonic acid, and among these, an unsaturated carboxylic acid compound and vinylsulfonic acid are preferred, (meth)acrylic acid and vinylsulfonic acid are more preferred, and (meth)acrylic acid is particularly preferred. The monomer having the acid group may be used alone or as a combination of two or more kinds thereof.
The content of the monomer having the acid group is not particularly limited, as far as it is controlled to achieve the target value for the acid value, and is preferably 0.01 to 5 parts by mass per 100 parts by mass of the total constitutional units of the copolymer (A).

(Weight Average Molecular Weight of Copolymer (A))

The weight average molecular weight (Mw) of the copolymer (A) is not particularly limited, and is preferably 60,000 or less, and more preferably 40,000 or less. A coating film formed with the antifouling coating composition containing the copolymer (A) having Mw of 40,000 or less may have good hydrolyzability, good self-polishing property (consumption property of the coating film), and further enhanced antifouling property, and can exhibit excellent long-term durability.

The weight average molecular weight (Mw) of the copolymer (A) is preferably 12,000 or more, and more preferably 13,000 or more, from the standpoint of the strength and the excellent long-term durability of the antifouling coating film.

The weight average molecular weight (Mw) of the copolymer (A) is preferably 12,000 or more and 25,000 or less, and more preferably 12,000 or more and 20,000 or less, from the standpoint of the decrease of the viscosity of the coating composition and the coating workability.

The weight average molecular weight (Mw) may be measured by gel permeation chromatography (GPC). The value obtained through GPC is a value obtained with a calibration curve produced with polystyrene as the standard substance (i.e., a polystyrene conversion value).

(Production Method of Copolymer (A))

The copolymer (A) may be obtained by polymerizing the (a1) and the ethylenically unsaturated monomer other than the (a1) by a known polymerization method. Examples of the polymerization method include solution polymerization, bulk polymerization, suspension polymerization, emulsion polymerization, and living polymerization. Among these, solution polymerization using a radical polymerization initiator is preferred in consideration of the productivity of the copolymer (A) and the production workability. In the polymerization methods, a solvent, a radical polymerization initiator, a chain transfer agent, and the like may be used depending on necessity.

Examples of the solvent include an aromatic hydrocarbon solvent (such as xylene and mesitylene), an ester solvent (such as butyl acetate and isobutyl acetate), and a ketone solvent (such as methyl isobutyl ketone and methyl amyl ketone). The solvent may be used alone or as a combination of two or more kinds thereof.

In the case where a solvent is used in the production of the copolymer (A), the amount thereof used is not particularly limited, and is preferably 5 to 150 parts by mass per 100 parts by mass in total of the (a1), the (a2), and the (a3).

Examples of the radical polymerization initiator include an azo compound, such as 2,2'-azobisisobutyronitrile, 2,2'-azobis-2-methylbutyronitrile, 2,2'-azobis-2,4-dimethylvaleronitrile, and 4,4'-azobis-4-cyanovaleric acid; an organic peroxide, such as t-butyl peroxy-2-ethylhexanoate, t-butyl peroxybenzoate, and di-t-butyl peroxide; and a persulfate salt, such as ammonium persulfate and sodium persulfate. The radical polymerization initiator may be used alone or as a combination of two or more kinds thereof.

The radical polymerization initiator may be added to the reaction system only at the time of starting the polymerization reaction, or may be added to the reaction system both at the time of starting the reaction and during the reaction.

In the case where a radical polymerization initiator is used in the production of the copolymer (A), the amount thereof used is not particularly limited, and is preferably 0.1 to 20 parts by mass per 100 parts by mass in total of the (a1), the (a2), and the (a3).

Examples of the chain transfer agent include an aromatic compound (such as α-methylstyrene dimer) and an organic sulfur compound (such as thioglycolic acid, mercaptopropionic acid, 2-ethylhexyl mercaptopropionate, and thiophenol). The chain transfer agent may be used alone or as a combination of two or more kinds thereof.

In the case where a chain transfer agent is used in the production of the copolymer (A), the amount thereof used is preferably 0.1 to 5 parts by mass per 100 parts by mass in total of the (a1), the (a2), and the (a3).

The content of the copolymer (A) in the solid content of the antifouling coating composition of the present invention is preferably 5 to 50% by mass, and more preferably 10 to 20% by mass, from the standpoint of the achievement of the antifouling coating composition excellent in water resistance and various properties (such as the crack resistance and the antifouling property of the coating film) for a long period of time.

The mass that is the basis for determining the contents of the components in the present invention is the mass of the components that can constitute the dried coating film except for the volatile components in the case where the components include the volatile components such as a solvent for dilution, i.e., the mass of the "solid content". The solid content means the residue obtained by evaporating the volatile components, such as a solvent, from the components or the composition containing the volatile components, such as a solvent, by drying in a hot air dryer at 105°C for 3 hours.

<Optional Components>

The antifouling coating composition of the present invention may further contain at least one kind selected from the group consisting of a rosin compound and/or a monocarboxylic acid compound (B), copper or a copper compound (C), an organic antifouling agent (D), an additional binder component (E), a coloring pigment (F), an extender pigment (G), a pigment dispersant (H), a plasticizer (I), an anti-sagging agent (J), an anti-settling agent (K), a dehydrating agent (L), and a solvent (M). The components (B) to (M) will be described in detail below.

<Rosin Compound and/or Monocarboxylic Acid Compound (B)>

The antifouling coating composition of the present invention may contain a rosin compound and/or a monocarboxylic acid compound (B) for the further enhancement of the antifouling property of the antifouling coating film. The rosin compound and/or monocarboxylic acid compound (B) facilitates the renewability of the antifouling coating film containing the same from the surface thereof in water, and in the case where the antifouling coating film contains an antifouling agent, accelerates the release of the antifouling agent to water to enhance the antifouling property of the antifouling coating film, and furthermore has a function imparting appropriate water resistance to the antifouling coating film. The rosin compound and/or monocarboxylic acid compound (B) is preferably contained particularly from the standpoint of the enhancement of the static antifouling property.

Preferred examples of the rosin compound and/or monocarboxylic acid compound (B) include a compound obtained by substituting one carboxy group on a saturated or unsaturated aliphatic hydrocarbon having 10 to 40 carbon atoms, a compound obtained by substituting one carboxy group on a saturated or unsaturated alicyclic hydrocarbon having 3 to 40 carbon atoms, and a compound obtained by substituting one carboxy group on a modified product of an aliphatic hydrocarbon or an alicyclic hydrocarbon.

Among these, abietic acid, neoabietic acid, dehydroabietic acid, palustric acid, isopimaric acid, pimaric acid, trimethylisobutenylcyclohexenecarboxylic acid, versatic acid, stearic acid, and naphthenic acid.

A rosin compound containing abietic acid, palustric acid, isopimaric acid, or the like as a major component is also preferred. Examples of the rosin compound include rosin, such as gum rosin, wood rosin, and tall oil rosin, a rosin derivative, such as hydrogenated rosin, disproportionated rosin, and a rosin metal salt, and pine tar.

Examples of the trimethylisobutenylcyclohexenecarboxylic acid include a reaction product of 2,6-dimethyloct-2,4,6-triene and methacrylic acid, which contains 1,2,3-trimethyl-5-(2-methylprop-1-en-1-yl)cyclohex-3-ene-1-carboxylic acid and 1,4,5-trimethyl-2-(2-methylprop-1-en-1-yl)cyclohex-3-ene-1-carboxylic acid as a major component (85% by mass or more).

The rosin compound and/or monocarboxylic acid compound (B) may be used alone or as a combination of two or more kinds thereof.

In the case where the antifouling coating composition of the present invention contains the rosin compound and/or monocarboxylic acid compound (B), the content thereof in the solid content of the antifouling coating composition is preferably 1 to 50% by mass, more preferably 2 to 20% by mass, and further preferably 3 to 10% by mass. From the standpoint of the good antifouling property and the properties of the coating film formed, the content thereof is preferably 5 to 150 parts by mass, more preferably 10 to 150 parts by mass, and further preferably 15 to 100 parts by mass, per 100 parts by mass of the solid content of the silyl ester copolymer (A). An excessive amount of the rosin compound and/or monocarboxylic acid compound (B) contained may cause the decrease of the crack resistance, and a too small amount thereof may cause decrease of the glossiness (appearance) of the coating film.

<Copper or Copper Compound (C)>

The antifouling coating composition of the present invention may contain copper or a copper compound (C) (except for a copper pyrithione) for the further enhancement of the antifouling property of the antifouling coating film formed with the antifouling coating composition. The copper compound may be any of organic and inorganic copper compounds, and examples of the copper or copper compound (C) include copper in the form of powder (copper powder), cuprous oxide, copper thiocyanate (copper rhodanide), and cupronickel.

The copper or copper compound (C) may be used alone or as a combination of two or more kinds thereof.

In the copper or copper compound (C), cuprous oxide is more preferably contained from the standpoint of the enhancement of the antifouling property, particularly the antifouling property against animals among aquatic organisms, and the water resistance of the antifouling coating film formed.

The cuprous oxide contained preferably has an average particle diameter of approximately from 1 to 30 pm, and from the standpoint of the enhancement of the antifouling property and the water resistance of the antifouling coating film formed, more preferably has an average particle diameter of 2 to 10 pm.

The cuprous oxide is preferably surface-treated with glycerin, stearic acid, lauric acid, sucrose, lecithin, a mineral oil, or the like, from the standpoint of the antifouling property and the long-term stability in storage.

A commercially available product of the cuprous oxide of this type may be used, and examples thereof include "NC-301", produced by NC-Tec Co., Ltd. (average particle diameter: 2 to 4 pm), "NC-803", produced by NC-Tec Co., Ltd. (average particle diameter: 6 to 10 pm), "Nordox", produced by Nordox Industrier AS, "Red Copp 97N Premium", produced by American Chemet Corporation, "Purple Copp", produced by American Chemet Corporation, and "LoLoTint 97", produced by American Chemet Corporation.

In the case where the antifouling coating composition of the present invention contains the copper or copper compound (C), the content thereof in the solid content of the antifouling coating composition is preferably 20 to 80% by mass, more preferably 40 to 70% by mass, and further preferably 50 to 65% by mass, from the standpoint of the antifouling property and the water resistance of the antifouling coating film formed with the antifouling coating composition.

<Organic Antifouling Agent (D)>

In the present invention, the antifouling coating composition of the present invention may contain an organic antifouling agent (D) except for the copper or copper compound (C), for the purpose of imparting the antifouling property to the antifouling coating film.

Examples of the organic antifouling agent (D) include a copper pyrithione, zinc pyrithione, 4,5-dichloro-2-n-octyl-4-isothiazolin-3-one (trivial name: DCOIT), 4-bromo-2-(4-chlorophenyl)-5-(trifluoromethyl)-1H-pyrrole-3-carbonitrile (trivial name: tralopyril), 4,5-dimethyl-1H-imidazole, (+/-)-4-[1-(2,3-dimethylphenyl)ethyl]-1H-imidazole (trivial name: medetomidine), a borane-nitrogen-based base adduct (such as pyridine triphenyl borane and 4-isopropylpyridine diphenylmethyl borane), N,N-dimethyl-N'-(3,4-dichlorophenyl)urea, N-(2,4,6-trichlorophenyl)maleimide, 2-methylthio-4-tert-butylamino-6-cyclopropylamino-1,3,5-triazine, 2,4,5,6-tetrachloroisophthalonitrile, bisdimethyldithiocarbamoyl zinc ethylene bisdithiocarbamate, chloromethyl-n-octyl disulfide, N',N'-dimethyl-N-phenyl-(N-fluorodichloromethylthio)sulfamide, tetraalkylthiuram disulfide, zinc dimethyl dithiocarbamate, zinc ethylene bisdithiocarbamate, 2,3-dichloro-N-(2',6'-diethylphenyl)maleimide, and 2,3-dichloro-N-(2'-ethyl-6'-methylphenyl)maleimide. The organic antifouling agent (D) may be used alone or as a combination of two or more kinds thereof.

In the organic antifouling agent (D), copper pyrithione, 4,5-dichloro-2-n-octyl-4-isothiazolin-3-one, and (+/-)-4-[1-(2,3-dimethylphenyl)ethyl]-1H-imidazole are preferred, and copper pyrithione is particularly preferred.

In the case where the antifouling coating composition of the present invention contains the organic antifouling agent (D), the content thereof in the solid content of the antifouling coating composition is preferably 0.5 to 10% by mass, and more preferably 1 to 5% by mass, from the standpoint of the coating workability of the antifouling coating composition and the antifouling property and the water resistance of the antifouling coating film.

<Additional Binder Component (E)>

In the present invention, the antifouling coating composition of the present invention may contain an additional binder component (E) other than the silyl ester copolymer (A), for the purpose of imparting the static antifouling property, the water resistance, the crack resistance, and the strength to the antifouling coating film.

Examples of the additional binder component (E) include an acryl copolymer (acrylic resin), a vinyl polymer, n-paraffin, terpene phenol. The additional binder component (E) may be used alone or as a combination of two or more kinds thereof.

The acryl copolymer used may be a polymer obtained through polymerization of an ethylenically unsaturated monomer, and preferably contains a constitutional unit derived from at least one kind selected from the group consisting of the (meth)acrylate ester compound (a32) and a metal ester group-containing unsaturated monomer (e1) from the standpoint of the static antifouling property.

The metal ester group-containing unsaturated monomer (e1) means a monomer containing a metal ester group formed by bonding a metal and a carboxylic acid. A polyvalent metal ester group or a divalent metal ester group described later means a group formed by bonding a polyvalent metal or a divalent metal and a carboxylic acid. The metal ester group is preferably a polyvalent metal ester group, and more preferably a divalent metal ester group.

Examples of the metal constituting the metal ester group include magnesium, calcium, neodymium, titanium, zirconium, iron, ruthenium, cobalt, nickel, copper, zinc, and aluminum.

A divalent metal may be appropriately selected from the aforementioned metals. Among these, metals of Groups 10 to 12, such as nickel, copper, and zinc, are preferred, a metal selected from the group consisting of copper and zinc is more preferred, and zinc is further preferred.

Examples of the monomer include zinc di(meth)acrylate, copper di(meth)acrylate, zinc acrylate methacrylate, copper acrylate methacrylate, zinc di(3-acryloyloxypropionate), copper di(3-acryloyloxypropionate), zinc (meth)acrylate naphthenate, and copper (meth)acrylate naphthenate. The metal ester group-containing unsaturated monomer (e1) may be used alone or as a combination of two or more kinds thereof.

The acryl copolymer may contain a constitutional unit derived from an additional vinyl compound (e2).

Examples of the additional vinyl compound (e2) include styrene, α-methylstyrene, vinyl acetate, vinyl benzoate, vinyltoluene, acrylonitrile, vinylpyridine, vinylpyrrolidone, and vinyl chloride.

The additional vinyl compound (e2) may be used alone or as a combination of two or more kinds thereof.

The additional binder component (E) used may be a commercially available product, and examples thereof include "Dianal BR-106" (acryl polymer), produced by Mitsubishi Chemical Corporation.

Examples of the additional binder component (E) also include, in addition to the above, an acid group-containing polymer obtained through reaction of a polymer containing two or more acid groups, the rosin compound and/or monocarboxylic acid compound (B), and a metal compound, as described, for example, in WO 2014/010702.

Examples of the polymer containing two or more acid groups include a polyester polymer and an acryl polymer, and a polyester polymer is preferred.

The polyester polymer preferably has a solid content acid value of 50 to 250 mgKOH/g, and more preferably 80 to 200 mgKOH/g.

The polyester polymer can be obtained through reaction of one or more of a polyhydric alcohol and one or more of a polybasic carboxylic acid and/or an anhydride thereof, arbitrary kinds of which may be used in arbitrary amounts, and the acid value and the viscosity can be controlled by the combination thereof.

The polyester polymer is preferably, for example, a polymer obtained in such a manner that a trihydric or higher alcohol, a dibasic acid and/or an anhydride thereof, and a dihydric alcohol are reacted, and then an alicyclic dibasic acid and/or an anhydride thereof is reacted therewith.

The rosin compound and/or monocarboxylic acid compound (B) reacted with the polymer containing two or more acid groups may be the same one as described above, and among these, the rosin compound is preferably used.

The metal compound reacted with the polymer containing two or more acid groups may be, for example, a metal oxide, such as zinc oxide and cuprous oxide, and among these, zinc oxide is preferably used.

In the case where the antifouling coating composition of the present invention contains the additional binder component (E), the content thereof in the solid content of the antifouling coating composition is preferably 1 to 20% by mass.

<Coloring Pigment (F)>

The antifouling coating composition of the present invention may contain a coloring pigment (F) for controlling the color tone of the antifouling coating film formed with the antifouling coating composition and imparting an arbitrary color tone thereto.

Examples of the coloring pigment (F) include known organic or inorganic coloring pigments. Examples of the organic coloring pigment include Pigment Black 7 (carbon black), Pigment Red 170 (naphthol red), and Pigment Blue 15 (phthalocyanine blue). Examples of the inorganic coloring pigment include red iron oxide (bengal red) ($Fe_2O_3$), black iron oxide ($Fe_3O_4$), titanium oxide (titanium white, $TiO_2$), and yellow iron oxide.

The antifouling coating composition of the present invention may contain a colorant, such as a dye, except for the coloring pigment (F), along with the coloring pigment (F) or instead of the coloring pigment (F).

In the case where the antifouling coating composition of the present invention contains the coloring pigment (F), the content thereof in the solid content of the antifouling coating composition is preferably 0.5 to 10% by mass, while the preferred amount thereof may be determined by the hiding power demanded for the antifouling coating film formed and the target viscosity of the antifouling coating composition corresponding to the coating mode and the like.

<Extender Pigment (G)>

The antifouling coating composition of the present invention may contain an extender pigment (G) for the purpose of enhancing the coating film properties, such as the crack resistance, of the antifouling coating film formed with the antifouling coating composition.

Examples of the extender pigment (G) include talc, zinc oxide, silica (such as diatom earth and acid clay), mica, clay, potassium feldspar, calcium carbonate, kaolin, alumina white, white carbon, aluminum hydroxide, magnesium carbonate, barium carbonate, barium sulfate, and zinc sulfide. Among these, talc, zinc oxide, silica, mica, clay, calcium carbonate, kaolin, barium sulfate, and potassium feldspar are preferred. The extender pigment (G) may be used alone or as a combination of two or more kinds thereof.

In the case where the antifouling coating composition of the present invention contains the extender pigment (G), the content thereof in the solid content of the antifouling coating composition is preferably 1 to 50% by mass, while the preferred amount thereof may be determined by the hiding power demanded for the antifouling coating film formed and the target viscosity of the antifouling coating composition corresponding to the coating mode and the like.

<Pigment Dispersant (H)>

In the case where the antifouling coating composition of the present invention contains the coloring pigment (F) and the extender pigment (G), the antifouling coating composition may contain a pigment dispersant (H) for the purpose of enhancing the dispersibility of the coloring pigment (F) and the extender pigment (G).

Examples of the pigment dispersant (H) include known organic or inorganic pigment dispersants. Examples of the pigment dispersant include an aliphatic amine compound or an organic acid compound, and "Disperbyk-101" (produced by BYK-Chemie Japan K.K.).

<Plasticizer (I)>

The antifouling coating composition of the present invention may contain a plasticizer (I) for the enhancement of the crack resistance of the resulting antifouling coating film.

Examples of the plasticizer (I) include tricresyl phosphate (TCP), paraffin chloride (chlorinated paraffin), a petroleum resin, a ketone resin, polyvinyl ethyl ether, and a dialkyl phthalate. Among these, the plasticizer (I) is preferably paraffin chloride (chlorinated paraffin), a petroleum resin, or a ketone resin from the standpoint of the coating film water resistance and the coating film hydrolyzability (consumption property) of the antifouling coating film formed with the antifouling coating composition. The plasticizer (I) may be used alone or as a combination of two or more kinds thereof.

Specific examples of the chlorinated paraffin include "Toyoparax A-40, A-50, A-70, A-145, and A-150", produced by Tosoh Corporation. Examples of the petroleum resin include a C5-based resin, a C9-based resin, a styrene-based resin, a dichloropentadiene-based resin, and hydrated products thereof. Specific examples of the petroleum resin include "Quintone 1500 and 1700", produced by Zeon Corporation.

In the case where the antifouling coating composition of the present invention contains the plasticizer (I), the content thereof in the solid content of the antifouling coating composition is preferably 0.1 to 10% by mass, and more preferably 0.5 to 5% by mass. In the case where the content of the plasticizer (I) is in the range, the plasticity of the antifouling coating film can be retained favorably.

<Anti-sagging Agent (J)>

The antifouling coating composition of the present invention may contain an anti-sagging agent (J) (which may also be referred to as an anti-running agent) from the standpoint of the reduction of the sagging of the antifouling coating composition in the case where the antifouling coating composition is coated on a substrate.

Examples of the anti-sagging agent (J) include amide wax (such as a fatty acid amide), hydrogenated castor oil wax, a mixture thereof, and synthetic fine powder silica (Aerosil (trade name)), and among these, amide wax and synthetic fine powder silica are preferred.

The use of amide wax or synthetic fine powder silica as the anti-sagging agent (J) is preferred since the storage stability of the antifouling coating composition can be enhanced, and in the case where after forming the antifouling coating film, a coating film (i.e., an overcoating film) is formed on the antifouling coating film with a coating composition of the same kind (i.e., an antifouling coating composition) or a coating composition of a different kind, the adhesiveness (i.e., the interlayer adhesiveness and the recoating property) between the antifouling coating film and the overcoating film can be prevented from being decreased.

Examples of the commercially available product of the anti-sagging agent (J) include "Disparlon A630-20X", produced by Kusumoto Chemicals, Ltd., and "AS-A T-250F", produced by Itoh Oil Chemicals, Co., Ltd. The anti-sagging agent (J) may be used alone or as a combination of two or more kinds thereof.

In the case where the antifouling coating composition of the present invention contains the anti-sagging agent (J), the content thereof in the solid content of the antifouling coating composition is preferably 0.01 to 10% by mass, more preferably 0.1 to 3% by mass, and further preferably 0.3 to 2% by mass.

<Anti-settling Agent (K)>

The antifouling coating composition of the present invention may contain an anti-settling agent (K) from the standpoint of the prevention of the formation of precipitates in the coating composition in storage and the enhancement of the stirring property.

Examples of the anti-settling agent (K) include a stearate of Al, Ca, or Zn, polyethylene wax, and oxidized polyethylene wax, and among these, oxidized polyethylene wax is preferred. Examples of the commercially available product of the oxidized polyethylene wax include "Disparlon 4200-20X", produced by Kusumoto Chemicals, Ltd. The anti-settling agent (K) may be used alone or as a combination of two or more kinds thereof.

In the case where the antifouling coating composition of the present invention contains the anti-settling agent (K), the content thereof in the solid content of the antifouling coating composition is preferably 0.01 to 10% by mass, more preferably 0.1 to 3% by mass, and further preferably 0.2 to 2% by mass.

<Dehydrating Agent (L)>

The antifouling coating composition of the present invention exihibits excellent storage stability due to the use of the silyl ester copolymer (A) having good storage stability, and may contain a dehydrating agent (L) depending on necessity to provide further excellent long-term storage stability. Examples of the dehydrating agent (L) include an inorganic dehydrating agent and an organic dehydrating agent.

The inorganic dehydrating agent is preferably synthetic zeolite, anhydrous gypsum, and hemihydrate gypsum. The organic dehydrating agent is preferably an alkoxysilane compound, such as tetramethoxysilane, tetraethoxysilane, tetrapropoxysilane, tetrabutoxysilane, tetraphenoxysilane, methyltriethoxysilane, dimethyldiethoxysilane, and trimethylethoxysilane, a polyalkoxysilane compound, which is a partial hydrolytic condensate of the alkoxysilane, and an alkyl orthoformate, such as methyl orthoformate and ethyl orthoformate. Tetraethoxysilane as an alkoxysilane compound is particularly preferred. The dehydrating agent (L) may be used alone or as a combination of two or more kinds thereof.

In the case where the antifouling coating composition of the present invention contains the dehydrating agent (L), the content thereof in the solid content of the antifouling coating composition is preferably from 0.01 to 10% by mass, more preferably from 0.1 to 3% by mass, and further preferably 0.15 to 1% by mass. In the case where the content of the dehydrating agent (L) is in the range, the storage stability of the antifouling coating composition can be retained favorably.

<Solvent (M)>

The antifouling coating composition of the present invention may contain a solvent (M) depending on necessity for the purpose of enhancing the dispersibility of the silyl ester copolymer (A) and the like, retaining the low viscosity of the coating composition, and enhancing the spray atomization property. The solvent (M) may be the solvent that is used in the preparation of the silyl ester copolymer (A) or may be a solvent that is separately added in mixing the silyl ester copolymer (A) with the other components depending on necessity.

The solvent (M) used may be an organic solvent of an aromatic hydrocarbon solvent, an aliphatic hydrocarbon solvent, an alicyclic hydrocarbon solvent, a ketone solvent, an ester solvent, and an alcohol solvent, and an aromatic hydrocarbon organic solvent is preferred.

Examples of the aromatic hydrocarbon organic solvent include toluene, xylene, and mesitylene.

Examples of the aliphatic hydrocarbon organic solvent include pentane, hexane, heptane, and octane.

Examples of the alicyclic hydrocarbon organic solvent include cyclohexane, methylcyclohexane, and ethylcyclohexane.

Examples of the ketone organic solvent include acetylacetone, acetone, methyl ethyl ketone, methyl isobutyl ketone, and dimethyl carbonate.

Examples of the ester organic solvent include propylene glycol monomethyl ether acetate.

Examples of the alcohol organic solvent include isopropanol, n-butanol, and propylene glycol monomethyl ether.

The solvent (M) may be used alone or as a combination of two or more kinds thereof.

In the case where the antifouling coating composition of the present invention contains the solvent (M), the preferred content thereof in the antifouling coating composition may be determined by the target viscosity corresponding of the coating mode of the coating composition, and is preferably 50% by mass or less, more preferably 10 to 40% by mass, and further preferably 15 to 35% by mass. In the case where the content of the solvent (M) is too much, problems including the decrease of the anti-sagging property may occur in some cases.

[Production Method of Antifouling Coating Composition]

The antifouling coating composition of the present invention may be produced by appropriately using a known method. For example, the coating composition may be produced by adding the silyl ester copolymer (A) and the other components depending on necessity to a stirring vessel at one time or in an arbitrary order, and then mixing them with a known stirring and mixing means.

It is preferred that after mixing the components, the anti-sagging agent (J) (for example, amide wax (Disparlon A630-20X)) is finally added, and the mixture is dispersed, for example, by stirring for approximately from 10 to 20 minutes, so as to prepare the antifouling coating composition. The antifouling coating composition obtained by the preparation method can have decreased occurrence of sagging in coating on a substrate.

Examples of the stirring and mixing means include a high-speed disper, a sand grind mill, a basket mill, a ball mill, a three-roll mill, a ross mixer, a planetary mixer, and a Shinagawa universal mixer.

The paint produced by the aforementioned method is excellent in storage stability, and thus can be used without problem even after long-term storage.

[Antifouling Coating Film and Substrate with Antifouling Coating Film]

The antifouling coating film of the present invention is formed with the antifouling coating composition of the present invention. The antifouling coating film of the present invention is formed of the solid content of the antifouling coating composition, and for example, in the case where the antifouling coating composition of the present invention contains the solvent (M), the antifouling coating film can be formed by drying the antifouling coating composition having been applied to the substrate through coating or impregnation by natural drying or drying with a drying means, such as a heater (i.e., removing the solvent (M)).

The substrate with an antifouling coating film of the present invention is constituted by at least a substrate and the antifouling coating film of the present invention having provided on a surface of the substrate. The substrate with an antifouling coating film of the present invention can be produced by coating or impregnating the substrate (object, coated object) with the antifouling coating composition, for example, by a coating means, such as air spray, airless spray, a brush, or a roller, and drying the coating composition, with which the substrate is coated or impregnated, for example, by natural drying (at a temperature around room temperature) or by drying with a drying means, such as a heater, so as to provide the antifouling coating film on the substrate.

The thickness after drying of the antifouling coating film of the present invention may be arbitrarily selected corresponding to the renewal rate, the period of time of use, and the like of the antifouling coating film, and for example, is preferably 30 to 1,000 pm. Examples of the method of producing the coating film having the thickness include a method of coating the coating composition once or multiple times to a thickness per one time coating of preferably 10 to 300 $\mu$m, and more preferably 30 to 200 pm.

In the substrate with an antifouling coating film of the present invention, at least a part of the surface of the substrate is covered with the antifouling coating film formed with the antifouling coating composition, and the antifouling coating film is provided on the substrate.

The substrate with an antifouling coating film of the present invention may be produced by forming the antifouling coating film on the substrate by the aforementioned manner.

The method for producing the substrate with an antifouling coating film of the present invention is not particularly limited, and for example, the substrate with an antifouling coating film can be obtained, for example, by a production method including (1-1) a step of coating or impregnating the surface of the substrate with the antifouling coating composition of the present invention, so as to provide a coated material or an impregnated material, and (1-2) a step of drying the coated material or the impregnated material, so as to provide the antifouling coating film.

The method of coating the coating composition in the step (1-1) may be the coating method described above. The method of impregnating is not particularly limited, and may be performed by immersing the substrate in the coating composition in an amount that is sufficient for the impregnation. The method of drying the coated material or the impregnated material is not particularly limited, and the material may be dried by the similar method as in the production of the antifouling coating film.

The substrate with an antifouling coating film of the present invention may also be produced by a production method including (2-1) a step of drying the antifouling coating composition of the present invention, so as to provide an antifouling coating film, and (2-2) a step of adhering the antifouling coating film obtained in the step (2-1) to the substrate.

The method of forming the coating film in the step (2-1) is not particularly limited, and the coating film may be produced in the similar manner as in the production of the antifouling coating film.

The method of adhering the coating film to the substrate in the step (2-2) is not particularly limited, and the coating film may be adhered, for example, by the method described in JP 2013-129724 A.

The antifouling coating composition of the present invention can be used for maintaining the antifouling property of a substrate for a long period of time in a broad industrial field covering ships, fishery, underwater structures, and the like. Examples of the substrate include ships (such as an outside shell of ship's hull of a large-scale steel-hulled ship, such as a tanker and a containership, a fish boat, an FRP boat, a wooden vessel, and a yacht, and newly constructed ships or repaired ships of these kinds), fishery materials (such as a rope, a fish net, a fishing gear, a float, and a buoy), oil pipelines, water pipelines, circulating water pipes, diver suits, swimming goggles, oxygen cylinders, swimwear, torpedoes, underwater constructions, such as a water feeding and draining port, of a heat or nuclear power plant, submerged cables, seawater utilization equipments (such as a seawater pump), mega-floats, bay area roads, undersea tunnels, port facilities, and structures for various marine civil engineering works, such as a canal and a waterway.

Among these, the substrate is preferably selected from the group consisting of a ship, an underwater structure, and a fishery material, more preferably selected from the group consisting of a ship and an underwater structure, and further preferably a ship.

The substrate as the object having formed on the surface thereof the antifouling coating film formed with the antifouling coating composition of the present invention may have a surface treated with a treating agent, such as a rust inhibitor, or a surface having an anticorrosion coating film, such as a primer or a binder, formed thereon. The antifouling coating composition of the present invention may be overcoated on a surface having an antifouling coating film that has been formed by coating the antifouling coating composition of the present invention and/or an antifouling coating composition other than the present invention, and the kind of the coating film, which the antifouling coating film of the present invention may have a direct contact with, is not particularly limited.

Examples of the material of the substrate include a steel, aluminum, wood, and FRP for an outside shell of ship's hull, include natural or synthetic fibers for a fish net and the like, and include a synthetic resin material for a float, and a buoy, and the like, and the material of the substrate is not particularly limited, as far as the substrate is demanded to have antifouling property and the like in water.

On the surface of the substrate, particularly in the case where the substrate is a ship bottom or the like, in general, the antifouling coating composition of the present invention (antifouling paint) is coated once or multiple times by the aforementioned method on a surface of a primer-treated substrate formed by undercoating a primer, such as a rust inhibiting paint, on a surface of a steel substrate, and drying the antifouling coating composition, with which the substrate is coated or impregnated (particularly in the case where the substrate is a fish net or the like), so as to form the antifouling coating film, which is excellent in characteristics capable of preventing the adhesion of aquatic organisms, such as sea lettuce, barnacles, green laver, serpula, oysters, and bryozoan, (i.e., the antifouling property, particularly the static antifouling property) for a long period of time, and particularly in the case where the antifouling coating film contains an antifouling agent component (such as the copper or copper compound (C)), can perform sustained release of the antifouling agent component for a long period of time.

Examples of the rust inhibiting paint include a zinc-based shop primer, an epoxy resin-based zinc-rich primer, and an epoxy resin-based anticorrosion paint. The epoxy resin-based anticorrosion paint generally contains an epoxy resin as a resin component and an amine-based curing agent for an epoxy resin, and may further contain a thermoplastic resin (such as a vinyl-based copolymer), a rosin compound, a plasticizer, an extender pigment, a coloring pigment, a rust inhibiting pigment, a solvent, a curing accelerator, a coupling agent, an anti-sagging agent, and an anti-settling agent, depending on necessity.

[Antifouling Coating Composition for repairing Aged Antifouling Coating Film and Repair Method]

The antifouling coating composition of the present invention can be favorably applied to the purpose of repair coating of an aged antifouling coating film. Accordingly, the antifouling coating composition of the present invention is preferably an antifouling coating composition for repairing an aged antifouling coating film.

In the purpose of repair coating of an antifouling coating film, the present invention can provide a substrate with an antifouling coating film having an aged antifouling coating film on the surface of the substrate, and the antifouling coating film of the present invention on the aged antifouling coating film.

Examples of the production method of the substrate with an antifouling coating film of this type include a method using a substrate having an aged antifouling coating film on the surface thereof, as the substrate used in the step (1-1) or the step (2-2) in the production method of the substrate with an antifouling coating composition described above. The method can provide a substrate having a laminated antifouling coating film including an aged antifouling coating film having laminated thereon the antifouling coating film of the present invention.

The present invention can also provide a repair method of an aged antifouling coating film by forming an antifouling coating film with the antifouling coating composition of the present invention on the aged antifouling coating film.

In repair coating of an aged antifouling coating film, the antifouling coating composition of the present invention can form the antifouling coating film of the present invention directly on the aged antifouling coating film without removing of the aged antifouling coating film or coating a paint enhancing the adhesion to the base.

< Aged Antifouling Coating Film>

The aged antifouling coating film in the present invention means a coating film obtained by drying an antifouling coating composition that has been exposed to water, such as seawater or fresh water, for a prescribed period of time.

It is generally known that the antifouling paint coated on a ship bottom is recoated after elapsing the durable period, which is determined depending on the operation procedures. The specific durable period is 3 months to 6 months for a small ship represented by a fish boat and a pleasure boat, and 12 months to 90 months for a large ship represented by an oil tanker and a containership. The durable period varies depending on the operation procedures, such as the course and the like of the ships, and is not particularly limited. In the present invention, an antifouling coating film that has been exposed to water for a prescribed period of time is referred to as an aged antifouling coating film. The kind of the ships having the antifouling paint coated thereon is also not particularly limited in all the kinds of ships including the classes of merchant ships (classification number: 501), special ships (classification number: 502), fishing vessels (classification number: 503), and naval vessels (classification number: 504) of Japan Standard Commodity Classification.

The antifouling coating composition forming the aged antifouling coating film is not limited to the antifouling coating composition containing the silyl ester copolymer (A) of the present invention, and for example, may be a hydrolysis type antifouling coating composition containing at least one kind selected from a silyl ester copolymer having no acid value, a polysiloxane block-containing hydrolyzable copolymer, and a metal ester group-containing copolymer and a polyester polymer described as the additional binder component (E). As other embodiments, a self-erodible (hydration type) antifouling coating composition containing an acryl copolymer (acrylic resin) or a vinyl polymer as a binder component and the rosin compound and/or a monocarboxylic acid compound (B) may be used. For the hydrolysis type antifouling coating composition containing a polysiloxane block-containing hydrolyzable copolymer, reference may be made to WO 2018/087846.

The thickness of the aged antifouling coating film may be arbitrarily selected depending on the durable period used.

The solid content acid value in the silyl ester copolymer having no acid value is less than 0.1 mgKOH/g, and may be, for example, 0 mgKOH/g.

The surface of the aged antifouling coating film exposed to water has a fragile layer having fine pores therein formed through the elution of the antifouling agent component to water. It has been generally known that the fragile layer is formed not only in an antifouling coating film formed with the antifouling coating composition containing the silyl ester copolymer (A) according to the present invention, but also in any of antifouling coating films formed with all antifouling coating compositions that contains an antifouling agent, without particular limitation.

Examples

The present invention will be described more specifically with reference to examples below, but the present invention is not limited to the examples. In the following description, the "part" means part by mass unless the substance is deviated. The copolymers, the antifouling coating compositions, the antifouling coating films, and the like described below were evaluated in the following manner.

[Analysis Method of Copolymer]

<Measurement Method of Solid Content (Heating Residue) in Copolymer Solution>

The copolymer solution was weighed to a metal test tray having a known mass, spread to the bottom surface, heated in a thermostat chamber at a temperature retained to 105 to 110°C for 3 hours, taken out therefrom, cooled to room temperature, and then again measured for the mass, from which the remaining amount in the metal test tray was obtained. The solid content (% by mass) was calculated by the following expression.

$$\text{Solid content (\% by mass)} = (\text{remaining amount in metal test tray (g)} \times 100)$$
$$/ \text{ mass of copolymer solution weighed (g)}$$

<Measurement Method of Resin (Solid Content) Acid Value in Copolymer Solution>

The acid value of the silyl ester copolymer was measured in the following manner.

2.0 g of the silyl ester copolymer solution as a specimen was weighed in a beaker (weighed weight: p (g)). 60 mL of the following diluent was then weighed in the beaker to dilute the silyl ester copolymer solution. Thereafter, the silyl ester copolymer (A) mixed solution was subjected to a potentiometric titration with the following equipment and a titration solution (molar concentration: s (mol/L), factor: f), and the maximum slope point of the titration curve was designated as the end point (titration amount: q (mL)).

A blank titration was performed by the same operation (titration amount: r (mL)), and the solid content acid value was calculated by the following expression.

The acid value obtained in this measurement is a solution acid value, and thus is necessarily divided by the solid content of the silyl ester copolymer (A).

Diluent: Mixed solution obtained by mixing toluene/ethanol/ultrapure water = 100/95/5 (volume ratio)
Equipment: "Automatic Titrator CPM-1750" (produced by Hiranuma Sangyo Co., Ltd.)
Titration solution: Ethanolic potassium hydroxide solution (produced by Junsei Chemical Co., Ltd.) (s = 0.1 mol/L, f = 1.001, or s = 0.01 mol/L, f = 1.005)

$$\text{Measured solid content acid value (mgKOH/g)} = ((q\text{-}r) \times s \times 56.11 \times f) / (p \times$$
$$\text{solid content in copolymer solution} / 100)$$

f: Factor of potassium hydroxide solution
p: Weight of weighed silyl ester copolymer (A) solution (unit: g)
q: Titration amount at maximum slope point of titration curve as end point (unit: mL)

r: Titration amount of blank measurement (unit: mL)
s: Molar concentration of titration solution (unit: mol/L)

<Measurement Method of Weight Average Molecular Weight (Mw) of Copolymer>

The weight average molecular weight (Mw) of the copolymer was measured by gel permeation chromatography (GPC) under the following condition.

GPC Measurement Condition

Equipment: "HLC-8320GPC" (produced by Tosoh Corporation)
Columns: TSKgel guardcolumn SuperMP(HZ)-M + TSKgel SuperMultipore HZ-M + TSKgel SuperMultipore HZ-M (produced by Tosoh Corporation)
Eluent: Tetrahydrofuran (THF)
Flow rate: 0.35 mL/min
Detector: RI
Temperature of column thermostat chamber: 40°C
Calibration curve: Standard polystyrene and styrene monomer
Preparation method of specimen: The copolymer solution obtained in each of Production Examples was diluted by adding THF thereto, and then filtered with a membrane filter to provide a filtrate, which was designated as a specimen for GPC measurement.

<Measurement Method of Viscosity of Copolymer Solution>

The viscosity of the copolymer solution was measured with an E-type viscometer.

Viscosity Measurement Condition

Equipment: "TVE-25 type Viscometer TV-25" (produced by Toki Sangyo Co., Ltd.)
Rotor used: Standard rotor (1°34' × R24)
Measurement temperature: 25°C

[Evaluation of Antifouling Coating Composition and Coating Film]

<Production Method of Coating Film Test Panel>

(Production Method of Aged Antifouling Coating Film Test Panel)

On a sand blasted panel (300 mm × 100 mm × 2.3 mm), an epoxy-based paint (epoxy AC paint, "BANNOH 500", a trade name, produced by Chugoku Marine Paints, Ltd.) was coated by air spray to a dry film thickness of 150 μm, and dried at 23°C for 1 week to provide a cured coating film. Subsequently, on the cured coating film, a vinyl binder paint ("SILVAX SQ-K", a trade name, produced by Chugoku Marine Paints, Ltd.) was coated by air spray to a dry film thickness of 40 μm, and dried at 23°C for 24 hours.
Subsequently, on the surface of the dried coating film formed with the vinyl binder paint, the antifouling coating composition shown in Comparative Example 1 was coated to a dry film thickness of 200 μm, and dried at 23°C for 1 week to provide an antifouling coating film, thereby producing the antifouling coating film test panel.
The antifouling coating film test panel was vertically immersed in a static state for 12 months at 400 mm below water surface in off the coast of the Seto Inland Sea in Hatsukaichi-shi, Hiroshima-ken.
After 12 months from the start of immersion, the antifouling coating film test panel was taken out from the seawater and subjected to high-pressure water cleaning (pressure: 6.9 MPa), followed by drying at 23°C for 24 hours, so as to provide an aged antifouling coating film test panel. In the following description, the aged antifouling coating film may be referred to as an "aged coating film".

(Production Method of Test Panel with Antifouling Coating Film)

(1) Production Method of Test Panel with Antifouling Coating Film on Aged Coating Film for Glossiness Evaluation

The coating composition produced in each of Examples and Comparative Examples was coated with an applicator to a dry film thickness of 150 pm on the surface of the aged antifouling coating film of the aged coating film test panel, and dried at 23°C for 72 hours to provide an antifouling coating film, thereby producing a test panel with an antifouling coating film on an aged coating film for glossiness evaluation.

(2) Production Method of Test Panel with Antifouling Coating Film on Aged Coating Film for 50°C Accelerated Deterioration Test

The coating composition produced in each of Examples and Comparative Examples was coated with an applicator to a dry film thickness of 300 pm on the surface of the aged coating film of the aged coating film test panel, and dried at 23°C for 7 days to provide an antifouling coating film, thereby producing a test panel with an antifouling coating film on an aged coating film for a 50°C accelerated deterioration test.

(3) Production Method of Test Panel with Antifouling Coating Film on Aged Coating Film for Static Antifouling Test

The coating composition produced in each of Examples and Comparative Examples was coated with an applicator to a dry film thickness of 150 pm on the surface of the aged coating film of the aged coating film test panel, and dried at 23°C for 7 days to provide an antifouling coating film, thereby producing a test panel with an antifouling coating film on an aged coating film for a static antifouling test.

(4) Production Method of Test Panel with Antifouling Coating Film on Epoxy Coating Film for Static Antifouling Test

On a sand blasted panel (300 mm × 100 mm × 2.3 mm), an epoxy-based paint (epoxy AC paint, "BANNOH 500", a trade name, produced by Chugoku Marine Paints, Ltd.) was coated by air spray to a dry film thickness of 150 pm to provide a cured coating film. Subsequently, on the cured coating film, an epoxy-based binder paint ("BANNOH 500N", a trade name, produced by Chugoku Marine Paints, Ltd.) was coated by air spray to a dry film thickness of 100 pm to form an epoxy coating film.

The coating composition produced in each of Examples and Comparative Examples was coated with an applicator to a dry film thickness of 150 pm on the surface of the epoxy coating film, and dried at 23°C for 7 days to provide an antifouling coating film, thereby producing a test panel with an antifouling coating film on an epoxy coating film for a static antifouling test.

<Evaluation Method of Glossiness of Antifouling Coating Film>

The specular glossiness of the antifouling coating film formed on the aged coating film of the test panel produced in the item (1) above was measured. The measurement was performed according to JIS Z 8741:1997 in the following manner. The measurement was performed with BYK-Gardner micro-tri-gloss, available from Toyo Seiki Seisakusho, Ltd.

The value of the 85° glossiness measured was scored according to the following standard.

(Evaluation Standard)

0: 85° glossiness of 25 or more
1: 85° glossiness of less than 25 and 20 or more
2: 85° glossiness of less than 20 and 15 or more
3: 85° glossiness of less than 15 and 10 or more
4: 85° glossiness of less than 10

<Test Panel with Antifouling Coating Film on Aged Coating Film for 50°C Accelerated Deterioration Test (Evaluation of Appearance of Coating Film)>

The test panel with an antifouling coating film on an aged coating film produced in the item (2) above was immersed in artificial seawater at 50°C, and the appearance of the coating film was investigated according to the following evaluation standard every one month from the start of immersion.

The surface of the antifouling coating film of the test panel with an antifouling coating film on an aged coating film was visually observed for the extent of cracking, which was graded for the density of cracks as shown in the following tables according to JIS K5600-8-4:1999. The long-term durability of the antifouling coating film and the antifouling substrate can be evaluated by the evaluation of appearance.

(Evaluation Standard)

Evaluation point: Class of density of cracks
0: No crack
1: Density 1
2: Density 2
3: Density 3

<Evaluation Method of Test Panel with Antifouling Coating Film on Aged Coating Film Test Panel for Static Antifouling Test>

The test panel with an antifouling coating film on an aged coating film for a static antifouling test and the test panel with an antifouling coating film on an epoxy coating film for a static antifouling test produced in the items (3) and (4) above each were vertically immersed in a static state at 400 mm below water surface in off the coast of the Seto Inland Sea in Hatsukaichi-shi, Hiroshima-ken, and every one month from the start of immersion, the area of the antifouling coating film having aquatic organisms adhered thereon (hereinafter referred to as an "adhesion area") (%) based on the total area of the antifouling coating film of the test panel that was always in seawater as 100% was measured, by which the static antifouling property was evaluated according to the following evaluation standard.

(Evaluation Standard)

0: Adhesion area of less than 1%
0.5: Adhesion area of 1% or more and less than 10%
1: Adhesion area of 10% or more and less than 20%
2: Adhesion area of 20% or more and less than 30%
3: Adhesion area of 30% or more and less than 40%
4: Adhesion area of 40% or more and less than 50%
5: Adhesion area of 50% or more to 100%

<Evaluation of Volatile Organic Compound (VOC)>

(1) Measurement of Mass of Volatile Organic Compound (VOC)

The mass of VOC was calculated from the paint specific gravity and the mass NV described below according to the following expression.

$$\text{VOC (g/L)} = \text{paint specific gravity} \times 1000 \times (100\text{-mass NV}) / 100$$

(2) Specific Gravity

The mass of the antifouling coating composition filled in a specific gravity cup having a capacity of 100 mL was measured at 25°C to obtain the specific gravity (paint specific gravity).

(3) Heating Residue (Mass NV)

1 g of the antifouling coating composition was weighed in a flat bottom tray, uniformly spread with a wire having a known mass, and dried at 125°C for 1 hour, and then the masses of the residue and the wire were measured, from which the heating residue (% by mass) was calculated.

<Evaluation of Initial Viscosity (After 1 Week from Production)>

The antifouling coating composition produced in Examples and Comparative Examples immediately after production each were allowed to stand in a thermostat chamber at 25°C for 1 week, and the viscosity (unit: KU) after storing at 25°C was measured with a Stomer viscometer according to JIS K5600:2014.

<Spray Workability>

The antifouling coating composition produced in Examples and Comparative Examples each were retained at 23°C and sprayed with air spray, and the spread of the spray pattern was visually confirmed. The evaluation was performed according to the following standard.

(Evaluation Standard)

A: In coating the antifouling coating composition by air spray on a substrate, the antifouling coating composition was sprayed in the form of mist of fine particles, and the spray pattern was a uniform pattern without stripes, resulting in good atomization property.
B: In coating the antifouling coating composition by air spray on a substrate, the antifouling coating composition was sprayed in the form of mist of fine particles, and the spray pattern was spread, but a tail was slightly observed.
C: In coating the antifouling coating composition by air spray on a substrate, the antifouling coating composition was sprayed in the form of mist of fine particles, and the spray pattern was spread, but a tail was observed.
D: In coating the antifouling coating composition by air spray on a substrate, the antifouling coating composition was sprayed in the form of mist of fine particles, and the spray pattern was spread, but the pattern width was narrow, resulting in poor atomization property.
E: In coating the antifouling coating composition by air spray on a substrate, the antifouling coating composition was not sprayed in the form of mist of fine particles, the spray pattern was not spread, the coating operation was unable to perform, and atomization did not occur.

The "tail" herein means a phenomenon that thick stripes occurs both ends of the spray pattern.

<Synthesis of Copolymer Solution: Production Example A1>

The reaction was performed under ordinary pressure in a nitrogen atmosphere. In a reaction vessel equipped with a stirrer, a reflux condenser, a thermometer, a nitrogen introducing tube, and a dropping funnel, 428.6 parts of xylene and 100 parts of triisopropylsilyl methacrylate (TIPSMA) were charged, and heated to a liquid temperature of 80°C under stirring with the stirrer. While retaining the liquid temperature in the reaction vessel to 80±5°C, a mixture containing 500 parts of TIPSMA, 250 parts of 2-methoxyethyl methacrylate (MEMA), 98 parts of methyl methacrylate (MMA), 50 parts of butyl acrylate (BA), 2 parts of methacrylic acid (MAAc), and 13 parts of 2,2'-azobisisobutyronitrile (AIBN) was added dropwise to the reaction vessel over 2 hours from the dropping funnel. After completing the dropwise addition, the reaction liquid was stirred at 80°C for 1 hour and at 80 to 95°C for 1 hour and 30 minutes. Thereafter, while retaining to 95°C, 1 part of AIBN was added to the reaction liquid four times every 30 minutes, and the liquid temperature was increased to 105°C to complete the polymerization reaction. Subsequently, 238 parts of xylene was added to the reaction vessel, and the liquid was stirred until uniformity, so as to provide a copolymer solution (A1). The properties thereof are shown in Table 1.

<Synthesis of Copolymer Solution: Production Examples A2 to A7, A10 to A17, and A19 to A21 and Comparative Production Examples Z1 and Z3 to Z6>

Copolymer solutions (A2) to (A7), (A10) to (A17), (A19) to (A21), (Z1), and (Z3) to (Z6) were obtained by performing reaction in the same manner as in Production Example A1 except that the monomer mixtures having the compositions shown in Tables 1 and 2 were used instead of the monomer mixture used in Production Example A1, and the reaction temperature, the period of time of dropwise addition, the amount of the initiator, and the like were appropriately controlled. The properties thereof are shown in Tables 1 and 2.

<Synthesis of Copolymer Solution: Production Example A8>

The reaction was performed under ordinary pressure in a nitrogen atmosphere. In a reaction vessel equipped with a stirrer, a reflux condenser, a thermometer, a nitrogen introducing tube, and a dropping funnel, 428.6 parts of xylene and 100 parts of TIPSMA were charged, and heated to a liquid temperature of 80°C under stirring with the stirrer. While retaining the liquid temperature in the reaction vessel to 80±5°C, a mixture containing 500 parts of TIPSMA, 250 parts of MEMA, 95 parts of MMA, 50 parts of BA, and 12.5 parts of AIBN was added dropwise to the reaction vessel over 2 hours from the dropping funnel, and simultaneously 0.5 part of 4,4'-azobis-4-cyanovaleric acid added to the reaction vessel ten times every 10 minutes. After completing the dropwise addition, the reaction liquid was stirred at 80°C for 1 hour and at 80 to 95°C for 1 hour and 30 minutes. Thereafter, while retaining to 95°C, 1 part of AIBN was added four times every 30 minutes, and the liquid temperature was increased to 105°C to complete the polymerization reaction. Subsequently, 238 parts of xylene was added to the reaction vessel, and the liquid was stirred until uniformity, so as to provide a copolymer solution (A8). The properties thereof are shown in Table 1.

<Synthesis of Copolymer Solution: Production Example A9>

The reaction was performed under ordinary pressure in a nitrogen atmosphere. In a reaction vessel equipped with a stirrer, a reflux condenser, a thermometer, a nitrogen introducing tube, and a dropping funnel, 538.5 parts of xylene was charged, and heated to a liquid temperature of 80°C under stirring with the stirrer. While retaining the liquid temperature in the reaction vessel to 80±5°C, a mixture containing 500 parts of TIPSMA, 300 parts of MEMA, 95 parts of MMA, 100 parts of BA, 5 parts of MAAc, and 13 parts of AIBN was added dropwise to the reaction vessel over 2 hours from the dropping funnel. After completing the dropwise addition, the reaction liquid was stirred at 80°C for 1 hour and at 80 to 95°C for 1 hour and 30 minutes. Thereafter, while retaining to 95°C, 1 part of AIBN was added to the reaction liquid four times every 30 minutes, and the liquid temperature was increased to 105°C to complete the polymerization reaction. Subsequently, 128.1 parts of xylene was added to the reaction vessel, and the liquid was stirred until uniformity, so as to provide a copolymer solution (A9). The properties thereof are shown in Table 1.

<Synthesis of Copolymer Solution: Production Example A18 and Comparative Production Example Z2>

Copolymer solutions (A18) and (Z2) were obtained by performing reaction in the same manner as in Production Example A9 except that the monomer mixtures having the compositions shown in Tables 1 and 2 were used instead of the monomer mixture used in Production Example A9, and the reaction temperature, the period of time of dropwise addition, the amount of the initiator, and the like were appropriately controlled. The properties thereof are shown in Tables 1 and 2.

Table 1 (1/3)

| Production example of copolymer solution | | | | A1 | A2 | A3 | A4 | A5 | A6 | A7 |
|---|---|---|---|---|---|---|---|---|---|---|
| Monomer mixture | (a1) | TIPSMA | part by mass | 60 | 60 | 60 | 60 | 60 | 60 | 60 |
| | (a2) | MEMA | | 25 | 25 | 25 | 25 | 25 | 25 | 25 |
| | | MEA | | | | | | | | |
| | (a3) | MMA | | 9.8 | 9.5 | 9 | 8.5 | 9.5 | 9.8 | 9.5 |
| | | BA | | 5 | 5 | 5 | 5 | 5 | 5 | 5 |
| | | MAAc | | 0.2 | 0.5 | 1 | 1.5 | | | |
| | | AAc | | | | | | 0.5 | | |
| | | VSA-H | | | | | | | 0.2 | 0.5 |
| Evaluated properties | Content rate of Solid content (heating residue) in copolymer solution | | % by mass | 60.9 | 60.8 | 60.6 | 60.9 | 60.7 | 60.6 | 60.3 |
| | Viscosity of copolymer solution | | mPa·s | 1,694 | 2,212 | 2,772 | 4,390 | 1,734 | 1,589 | 1,686 |
| | Mw of copolymer | | - | 34,419 | 35,873 | 33,052 | 34,628 | 31,647 | 34,650 | 34,989 |
| | Solid content acid value of copolymer | | mgKOH/g | 1.4 | 3.2 | 6.1 | 9.7 | 3.3 | 1.0 | 2.5 |

Table 1 (2/3)

| Production example of copolymer solution | | | | A8 | A9 | A10 | All | A12 | A13 | A14 |
|---|---|---|---|---|---|---|---|---|---|---|
| Monomer mixture | (al) | TIPSMA | part by mass | 60 | 50 | 70 | 60 | 60 | 60 | 60 |
| | (a2) | MEMA | | 25 | 30 | 20 | | | | 25 |
| | | MEA | | | | | 25 | 25 | 25 | |
| | (a3) | MMA | | 9.5 | 9.5 | 4.5 | 14.5 | 14.5 | 14 | 9.5 |
| | | BA | | 5 | 10 | 5 | | | | 5 |
| | | MAAc | | | 0.5 | 0.5 | 0.5 | | 1 | 0.5 |
| | | AAc | | | | | | 0.5 | | |
| | | VSA-H | | | | | | | | |
| Evaluated properties | Content rate of Solid content (heating residue) in copolymer solution | | % by mass | 60.8 | 60.4 | 61 | 60.5 | 60.6 | 60.7 | 60.7 |
| | Viscosity of copolymer solution | | mPa·s | 1,488 | 1,535 | 1,603 | 915 | 910 | 1,220 | 524 |
| | Mw of copolymer | | - | 30,840 | 30,853 | 33,273 | 30,095 | 29,847 | 30,219 | 15,042 |
| | Solid content acid value of copolymer | | mgKOH/g | 1.2 | 3.2 | 3.1 | 3.1 | 3.5 | 6.1 | 3.2 |

Table 1 (3/3)

| Production example of copolymer solution | | | | A15 | A16 | A17 | A18 | A19 | A20 | A21 |
|---|---|---|---|---|---|---|---|---|---|---|
| Monomer mixture | (al) | TIPSMA | part by mass | 60 | 60 | 50 | 40 | 60 | 50 | 60 |
| | (a2) | MEMA | | 25 | 25 | 30 | 35 | 20 | 30 | 25 |
| | | MEA | | | | | | | | |
| | (a3) | MMA | | 9 | 8.5 | 9 | 14.5 | 9.5 | 9.5 | 9.5 |
| | | BA | | 5 | 5 | 10 | 10 | 10 | 10 | 5 |
| | | MAAc | | 1 | 1.5 | 1 | 0.5 | 0.5 | 0.5 | 0.5 |
| | | AAc | | | | | | | | |
| | | VSA-H | | | | | | | | |
| Evaluated properties | Content rate of Solid content (heating residue) in copolymer solution | | % by mass | 60.8 | 60.9 | 60.9 | 60.2 | 60.5 | 60.3 | 60.4 |
| | Viscosity of copolymer solution | | mPa·s | 649 | 868 | 687 | 2,783 | 467 | 557 | 1,227 |
| | Mw of copolymer | | - | 14,759 | 14,911 | 15,742 | 34,160 | 15,478 | 15,224 | 23,824 |
| | Solid content acid value of copolymer | | mgKOH/g | 6.0 | 9.8 | 6.3 | 3.2 | 3.3 | 3.2 | 3,3 |

Table 2

| Production example of copolymer solution | | | | Z1 | Z2 | Z3 | Z4 | Z5 | Z6 |
|---|---|---|---|---|---|---|---|---|---|
| Monomer mixture | (al) | TIPSMA | part by mass | 60 | 50 | 60 | 60 | 50 | |
| | (a2) | MEMA | | 25 | 30 | | 25 | 30 | 25 |
| | | MEA | | | | 25 | | | |
| | (a3) | MMA | | 10 | 10 | 10 | 10 | 10 | 9.5 |
| | | BA | | 5 | 10 | 5 | 5 | 10 | 5 |
| | | MAAc | | | | | | | 0.5 |
| | | TIPSA | | | | | | | 60 |
| Evaluated properties | Content rate of Solid content (heating residue) in copolymer solution | | % by mass | 61.1 | 60.5 | 61.4 | 61.0 | 60.4 | 60.0 |
| | Viscosity of copolymer solution | | mPa·s | 1,498 | 1,183 | 906 | 473 | 418 | 727 |
| | Mw of copolymer | | - | 31,213 | 29,189 | 26,944 | 15,134 | 14,947 | 34,996 |
| | Solid content acid value of copolymer | | mgKOH/g | 0.0 | 0.0 | 0.0 | 0.0 | 0.0 | 2.8 |

The abbreviations used in Tables 1 and 2 mean as follows.
TIPSMA: triisopropylsilyl methacrylate
MEMA: 2-methoxyethyl methacrylate
MEA: 2-methoxyethyl acrylate
MMA: methyl methacrylate
BA: n-butyl acrylate
MAAc: methacrylic acid
AAc: acrylic acid
VSA-H: trade name, produced by Asahi Kasei Finechem Co., Ltd., vinylsulfonic acid
TIPSA: triisopropylsilyl acrylate
The components mixed in the preparation of the following antifouling coating compositions are shown in Table 3.

Table 3

| Component | | | Product name | Manufacturer | Solid content (% by mass) |
|---|---|---|---|---|---|
| (B) | Rosin compound and/or monocarboxylic acid compound | gum rosin | Chinese gum rosin WW | made in China | 100 |
| | | tall rosin | Hartall R-WW | Harima Chemicals Group, Inc. | 100 |
| | | trimethylisobutenylcyclohexenecarboxylic acid | - | - | 100 |

(continued)

| Component | | | Product name | Manufacturer | Solid content (% by mass) |
|---|---|---|---|---|---|
| (C) | Copper or copper compound | cuprous oxide | NC-301 | NC-Tec Co., Ltd. | 100 |
| | | cuprous oxide | NORDOX | Nordox Industrier AS | 100 |
| | | cuprous oxide | NC-803 | NC-Tec Co., Ltd. | 100 |
| | | cuprous oxide | Purple Copp | American Chemet Corporation | 100 |
| (D) | Organic antifouling agent | copper pyrithione | Copper Omadine Powder | Arch UK Biocides, Ltd. | 100 |
| (F) | Coloring pigment | bengal red | - | - | 100 |
| | | titanium oxide | - | - | 100 |
| (G) | Extender pigment | talc | - | - | 100 |
| | | zinc oxide | - | - | 100 |
| (J) | Anti-sagging agent | fatty acid amide | Disparlon 630-20X | Kusumoto Chemicals, Ltd. | 20 |
| (K) | Anti-settling agent | oxidized polyethylene | Disparlon 4200-20X | Kusumoto Chemicals, Ltd. | 20 |
| (L) | Dehydrating agent | alkoxysilane | Ethyl Silicate 28 | Colcoat Co., Ltd. | 97 |
| (M) | Solvent | xylene | - | - | - |
| | | aromatic hydrocarbon solvent | Solvesso No. 100 | Exxon Mobil Corporation | - |

<Preparation of Antifouling Coating Composition: Example 1>

In a plastic vessel, 8.5 parts by mass of xylene and 1.0 part by mass of Solvesso No. 100 (aromatic hydrocarbon solvent, produced by Exxon Mobile Corporation) as solvents, 2.5 parts by mass of gum rosin, 0.5 part by mass of Ethyl Silicate 28, and 21 parts by mass of the copolymer solution (A1) were added, and mixed with a paint shaker until the components were uniformly dispersed or dissolved. Thereafter, 4 parts by mass of talc, 4 parts by mass of zinc oxide, 50 parts by mass of cuprous oxide (NC-301), 1.5 parts by mass of bengal red, 2.5 parts by mass of titanium oxide, 2 parts by mass of copper pyrithione (Copper Omadine Powder), and 1.0 part by mass of oxidized polyethylene (Disparlon 4200-20X) were added to the plastic vessel, and the components were dispersed by stirring with a paint shaker for 1 hour.

After dispersing, 1.5 parts by mass of a fatty acid amide (Disparlon A630-20X) was further added and stirred with the paint shaker for 20 minutes, and then the mixture was filtered with a filter mesh (aperture: 80 mesh) to remove the residue, thereby providing a filtrate (i.e., a coating composition Aa1). The resulting coating composition Aa1 was evaluated for the characteristics. The results are shown in Table 6.

<Preparation of Antifouling Coating Composition: Examples 2 to 28 and Comparative Examples 1 to 7, 10, and 11>

Antifouling coating compositions were prepared in the same manner as in Example 1 except that the kinds and the amounts of the components mixed were changed as shown in Tables 4 and 5, and evaluated for the characteristics. The results are shown in Tables 6 and 7. The coating compositions Aa2 to Aa28 and the coating compositions Zz1 to Zz7 shown in Tables 6 and 7 correspond to the antifouling coating compositions obtained in Examples 2 to 28 and Comparative Examples 1 to 7, 10, and 11 respectively.

<Preparation of Antifouling Coating Composition: Comparative Examples 8 and 9>

Antifouling coating compositions were prepared in the same manner as in Example 1 except that the kinds and the amounts of the components mixed were changed as shown in Table 5, and methacrylic acid was added simultaneously with the copolymer solution, and evaluated for the characteristics. The results are shown in Table 7. The coating compositions Zz8 and Zz9 shown in Table 7 correspond to the antifouling coating compositions obtained in Comparative Examples 8 and 9 respectively. The abbreviation MAAc used in Table 5 means methacrylic acid.

Table 4 (1/3)

| | Example No. | 1 | 2 | 3 | 4 | 5 | 6 | 7 | 8 | 9 |
|---|---|---|---|---|---|---|---|---|---|---|
| | Coating composition No. | Aa1 | Aa2 | Aa3 | Aa4 | Aa5 | Aa6 | Aa7 | Aa8 | Aa9 |
| Copolymer solution | (A1) | 21 | | | | | | | | |
| | (A2) | | 21 | 21 | 21 | 21 | 21 | 21 | | |
| | (A3) | | | | | | | | 21 | |
| | (A4) | | | | | | | | | 21 |
| | (A5) | | | | | | | | | |
| | (A6) | | | | | | | | | |
| | (A7) | | | | | | | | | |
| | (A8) | | | | | | | | | |
| | (A9) | | | | | | | | | |
| | (A10) | | | | | | | | | |
| | (A11) | | | | | | | | | |
| | (A12) | | | | | | | | | |
| | (A13) | | | | | | | | | |
| | (A14) | | | | | | | | | |
| | (A15) | | | | | | | | | |
| | (A16) | | | | | | | | | |
| | (A17) | | | | | | | | | |
| | (A18) | | | | | | | | | |
| | (A19) | | | | | | | | | |
| | (A20) | | | | | | | | | |
| | (A21) | | | | | | | | | |
| (B) Rosin compound and/or monocarboxylic acid compound | Chinese gum rosin WW | 2.5 | 2.5 | | 2.5 | 2.5 | 2.5 | | 2.5 | 2.5 |
| | Hartall R-WW | | | 2.5 | | | | | | |
| | trimethylisobutenylcyclohexenecarboxylic acid | | | | | | | 2.5 | | |

(continued)

| | Example No. | 1 | 2 | 3 | 4 | 5 | 6 | 7 | 8 | 9 |
|---|---|---|---|---|---|---|---|---|---|---|
| | Coating composition No. | Aa1 | Aa2 | Aa3 | Aa4 | Aa5 | Aa6 | Aa7 | Aa8 | Aa9 |
| (C) Copper or copper compound | NC-301 | 50 | 50 | 50 | | | 30 | 50 | 50 | 50 |
| | NORDOX | | | | 50 | | | | | |
| | NC-803 | | | | | 50 | | | | |
| | Purple copp | | | | | | 20 | | | |
| (D) Organic antifouline agent | Copper Omadine Powder | 2 | 2 | 2 | 2 | 2 | 2 | 2 | 2 | 2 |
| (F) Coloring pigment | bengal red | 1.5 | 1.5 | 1.5 | 1.5 | 1.5 | 1.5 | 1.5 | 1.5 | 1.5 |
| | titanium oxide | 2.5 | 2.5 | 2.5 | 2.5 | 2.5 | 2.5 | 2.5 | 2.5 | 2.5 |
| (G) Extender pigment | talc | 4 | 4 | 4 | 4 | 4 | 4 | 4 | 4 | 4 |
| | zinc oxide | 4 | 4 | 4 | 4 | 4 | 4 | 4 | 4 | 4 |
| (J) Anti-sagging agent | Disparlon A630-20X | 1.5 | 1.5 | 1.5 | 1.5 | 1.5 | 1.5 | 1.5 | 1.5 | 1.5 |
| (K) Anti-settling agent | Disparlon 4200-20X | 1 | 1 | 1 | 1 | 1 | 1 | 1 | 1 | 1 |
| (L) Dehydrating agent | Ethyl Silicate 28 | 0.5 | 0.5 | 0.5 | 0.5 | 0.5 | 0.5 | 0.5 | 0.5 | 0.5 |
| (M) Solvent | Xylene | 8.5 | 8.5 | 8.5 | 8.5 | 8.5 | 8.5 | 8.5 | 8.5 | 8.5 |
| | Solvesso No. 100 | 1 | 1 | 1 | 1 | 1 | 1 | 1 | 1 | 1 |
| Total | | 100 | 100 | 100 | 100 | 100 | 100 | 100 | 100 | 100 |
| Viscosity (after 1 week from production) (KU) | | 99 | 100 | 100 | 103 | 95 | 96 | 95 | 107 | 126 |
| VOC (g/L) | | 390 | 390 | 390 | 390 | 390 | 390 | 390 | 390 | 390 |
| * The unit for the numerals is part by mass. | | | | | | | | | | |

EP 3 831 898 A1

Table 4 (2/3)

| | | 10 | 11 | 12 | 13 | 14 | 15 | 16 | 17 | 18 |
|---|---|---|---|---|---|---|---|---|---|---|
| | Examnle No. | 10 | 11 | 12 | 13 | 14 | 15 | 16 | 17 | 18 |
| | Coating composition No. | Aa10 | Aa11 | Aa12 | Aa13 | Aa14 | Aa15 | Aa16 | Aa17 | Aa18 |
| Copolymer solution | (Al) | | | | | | | | | |
| | (A2) | | | | | | | | | |
| | (A3) | | | | | | | | | |
| | (A4) | | | | | | | | | |
| | (A5) | 21 | | | | | | | | |
| | (A6) | | 21 | | | | | | | |
| | (A7) | | | 21 | | | | | | |
| | (A8) | | | | 21 | | | | | |
| | (A9) | | | | | 21 | | | | |
| | (A10) | | | | | | 21 | | | |
| | (A11) | | | | | | | 17 | | |
| | (A12) | | | | | | | | 17 | |
| | (A13) | | | | | | | | | 17 |
| | (A14) | | | | | | | | | |
| | (A15) | | | | | | | | | |
| | (A16) | | | | | | | | | |
| | (A17) | | | | | | | | | |
| | (A18) | | | | | | | | | |
| | (A19) | | | | | | | | | |
| | (A20) | | | | | | | | | |
| | (A21) | | | | | | | | | |
| (B) Rosin compound and/or monocarboxylic acid compound | Chinese gum rosin WW | 2.5 | 2.5 | 2.5 | 2.5 | 2.5 | 2.5 | 6.8 | 6.8 | 6.8 |
| | Hartall R - WW | | | | | | | | | |
| | trimethylisobutenylcyclohexenecarb oxylic acid | | | | | | | | | |

| | | 10 | 11 | 12 | 13 | 14 | 15 | 16 | 17 | 18 |
|---|---|---|---|---|---|---|---|---|---|---|
| | Examnle No. | 10 | 11 | 12 | 13 | 14 | 15 | 16 | 17 | 18 |
| | Coating composition No. | Aa10 | Aa11 | Aa12 | Aa13 | Aa14 | Aa15 | Aa16 | Aa17 | Aa18 |
| (C) Copper or copper compound | NC-301 | 50 | 50 | 50 | 50 | 50 | 50 | 50 | 50 | 50 |
| | NORDOX | | | | | | | | | |
| | NC-803 | | | | | | | | | |
| | Purple copp | | | | | | | | | |
| (D) Organic antifouling agent | Copper Omadine Powder | 2 | 2 | 2 | 2 | 2 | 2 | 3 | 3 | 3 |
| (F) Coloring pigment | bengal red | 1.5 | 1.5 | 1.5 | 1.5 | 1.5 | 1.5 | 1.5 | 1.5 | 1.5 |
| | titanium oxide | 2.5 | 2.5 | 2.5 | 2.5 | 2.5 | 2.5 | 2.5 | 2.5 | 2.5 |
| (G) Extender pigment | talc | 4 | 4 | 4 | 4 | 4 | 4 | 3 | 3 | 3 |
| | zinc oxide | 4 | 4 | 4 | 4 | 4 | 4 | 3 | 3 | 3 |
| (J) Anti-sagging agent | Disparlon A630-20X | 1.5 | 1.5 | 1.5 | 1.5 | 1.5 | 1.5 | 1.5 | 1.5 | 1.5 |
| (K) Anti-settling agent | Disparlon 4200-20X | 1 | 1 | 1 | 1 | 1 | 1 | 1 | 1 | 1 |
| (L) Dehydrating agent | Ethyl Silicate 28 | 0.5 | 0.5 | 0.5 | 0.5 | 0.5 | 0.5 | 0.5 | 0.5 | 0.5 |
| (M) Solvent | Xylene | 8.5 | 8.5 | 8.5 | 8.5 | 8.5 | 8.5 | 9.2 | 9.2 | 9.2 |
| | Solvesso No. 100 | 1 | 1 | 1 | 1 | 1 | 1 | 1 | 1 | 1 |
| Total | | 100 | 100 | 100 | 100 | 100 | 100 | 100 | 100 | 100 |
| Viscosity (after 1 week from production) (KU) | | 101 | 91 | 95 | 95 | 101 | 93 | 95 | 94 | 96 |
| VOC (g/L) | | 390 | 390 | 390 | 390 | 390 | 390 | 367 | 367 | 367 |
| The unit for the numerals is part by mass. | | | | | | | | | | |

EP 3 831 898 A1

Table 4 (3/3)

| | Example No. | 19 | 20 | 21 | 22 | 23 | 24 | 25 | 26 | 27 | 28 |
|---|---|---|---|---|---|---|---|---|---|---|---|
| | Coating composition No. | Aa19 | Aa20 | Aa21 | Aa22 | Aa23 | Aa24 | Aa25 | Aa26 | Aa27 | Aa28 |
| Copolymer solution | (A1) | | | | | | | | | | |
| | (A2) | | | | | | | | | | |
| | (A3) | | | | | | | | | | |
| | (A4) | | | | | | | | | | |
| | (A5) | | | | | | | | | | |
| | (A6) | | | | | | | | | | |
| | (A7) | | | | | | | | | | |
| | (A8) | | | | | | | | | | |
| | (A9) | | | | | | | | | | |
| | (A10) | | | | | | | | | | |
| | (A11) | | | | | | | | | | |
| | (A12) | | | | | | | | | | |
| | (A13) | | | | | | | | | | |
| | (A14) | 17 | 21 | | | | | | | | |
| | (A15) | | | 17 | | | | | | | |
| | (A16) | | | | 17 | | | | | | |
| | (A17) | | | | | 17 | | | | | |
| | (A18) | | | | | | 21 | | | | |
| | (A19) | | | | | | | 21 | | | |
| | (A20) | | | | | | | | 21 | | |
| | (A21) | | | | | | | | | 21 | 17 |
| (B) Rosin compound and/or monocarboxylic acid compound | Chinese gum rosin WW | 6.8 | 2.5 | 6.8 | 6.8 | 6.8 | 2.5 | 2.5 | 2.5 | 2.5 | 6.8 |
| | Hartall R-WW | | | | | | | | | | |
| | trimethylisobutenylcyclohexene carboxylic acid | | | | | | | | | | |

| | Example No. | 19 | 20 | 21 | 22 | 23 | 24 | 25 | 26 | 27 | 28 |
|---|---|---|---|---|---|---|---|---|---|---|---|
| | Coating composition No. | Aa19 | Aa20 | Aa21 | Aa22 | Aa23 | Aa24 | Aa25 | Aa26 | Aa27 | Aa28 |
| (C) Copper or copper compound | NC-301 | 50 | 50 | 50 | 50 | 50 | 50 | 50 | 50 | 50 | 50 |
| | NORDOX | | | | | | | | | | |
| | NC-803 | | | | | | | | | | |
| | Purple copp | | | | | | | | | | |
| (D) Organic antifouling agent | Copper Omadine Powder | 3 | 2 | 3 | 3 | 3 | 2 | 2 | 2 | 2 | 3 |
| (F) Coloring pigment | bengal red | 1.5 | 1.5 | 1.5 | 1.5 | 1.5 | 1.5 | 1.5 | 1.5 | 1.5 | 1.5 |
| | titanium oxide | 2.5 | 2.5 | 2.5 | 2.5 | 2.5 | 2.5 | 2.5 | 2.5 | 2.5 | 2.5 |
| (G) Extender pigment | talc | 3 | 4 | 3 | 3 | 3 | 4 | 4 | 4 | 4 | 3 |
| | zinc oxide zinc oxide | 3 | 4 | 3 | 3 | 3 | 4 | 4 | 4 | 4 | 3 |
| (J) Anti-sagging agent | Disparlon A630-20X | 1.5 | 1.5 | 1.5 | 1.5 | 1.5 | 1.5 | 1.5 | 1.5 | 1.5 | 1.5 |
| (K) Anti-settling agent | Disparlon 4200-20X | 1 | 1 | 1 | 1 | 1 | 1 | 1 | 1 | 1 | 1 |
| (L) Dehydrating agent | Ethyl Silicate 28 | 0.5 | 0.5 | 0.5 | 0.5 | 0.5 | 0.5 | 0.5 | 0.5 | 0.5 | 0.5 |
| (M) Solvent | Xylene | 9.2 | 8.5 | 9.2 | 9.2 | 9.2 | 8.5 | 8.5 | 8.5 | 8.5 | 9.2 |
| | Solvesso No. 100 | 1 | 1 | 1 | 1 | 1 | 1 | 1 | 1 | 1 | 1 |
| Total | | 100 | 100 | 100 | 100 | 100 | 100 | 100 | 100 | 100 | 100 |
| Viscosity (after 1 week from production) (KU) | | 86 | 88 | 87 | 88 | 90 | 106 | 85 | 88 | 94 | 96 |
| VOC (g/L) | | 367 | 390 | 367 | 367 | 367 | 390 | 390 | 390 | 390 | 367 |
| The unit for the numerals is part by mass. | | | | | | | | | | | |

EP 3 831 898 A1

Table 5

| | Comparative Example No. | 1 | 2 | 3 | 4 | 5 | 6 | 7 | 8 | 9 | 10 | 11 |
|---|---|---|---|---|---|---|---|---|---|---|---|---|
| | Coating composition No. | Zz1 | Zz2 | Zz3 | Zz4 | Zz5 | Zz6 | Zz7 | Zz8 | Zz9 | Zz10 | Zz11 |
| Copolymer solution | (Z1) | 21 | | | | | | | 21 | | | |
| | (Z2) | | 21 | | | | | | | 21 | | |
| | (Z3) | | | 17 | | | | | | | | |
| | (Z4) | | | | 17 | 21 | | | | | | |
| | (Z5) | | | | | | 17 | | | | | |
| | (Z6) | | | | | | | 21 | | | | |
| | (A2) | | | | | | | | | | 14 | |
| | (A14 | | | | | | | | | | | 14 |
| | MAAc | | | | | | | | 0.1 | 0.1 | | |
| (B) Rosin compound and/or monocarboxylic acid compound | Chinese gum rosin WW | 2.5 | 2.5 | 6.8 | 6.8 | 2.5 | 6.8 | 2.5 | 2.5 | 2.5 | 9.3 | 9.3 |
| (C) Copper or copper compound | NC-301 | 50 | 50 | 50 | 50 | 50 | 50 | 50 | 50 | 50 | 50 | 50 |
| (D) Organic antifouling agent | Copper Omadine Powder | 2 | 2 | 3 | 3 | 2 | 3 | 2 | 2 | 2 | 3 | 3 |
| (F) Coloring pigment | bengal red | 1.5 | 1.5 | 1.5 | 1.5 | 1.5 | 1.5 | 1.5 | 1.5 | 1.5 | 1.5 | 1.5 |
| | titanium oxide | 2.5 | 2.5 | 2.5 | 2.5 | 2.5 | 2.5 | 2.5 | 2.5 | 2.5 | 2.5 | 2.5 |
| (G) Extender pigment | talc | 4 | 4 | 3 | 3 | 4 | 3 | 4 | 4 | 4 | 3.5 | 3.5 |
| | zinc oxide | 4 | 4 | 3 | 3 | 4 | 3 | 4 | 4 | 4 | 3 | 3 |
| (J) Anti-sagging agent | Disparlon A630-20X | 1.5 | 1.5 | 1.5 | 1.5 | 1.5 | 1.5 | 1.5 | 1.5 | 1.5 | 1.5 | 1.5 |
| (K) Anti-settling agent | Disparlon 4200-20X | 1 | 1 | 1 | 1 | 1 | 1 | 1 | 1 | 1 | 1 | 1 |
| (L) Dehydrating agent | Ethyl Silicate 28 | 0.5 | 0.5 | 0.5 | 0.5 | 0.5 | 0.5 | 0.5 | 0.5 | 0.5 | 0.5 | 0.5 |
| (M) Solvent | Xylene | 8.5 | 8.5 | 9.2 | 9.2 | 8.5 | 9.2 | 8.5 | 8.4 | 8.4 | 9.2 | 9.2 |
| | Solvesso No. 100 | 1 | 1 | 1 | 1 | 1 | 1 | 1 | 1 | 1 | 1 | 1 |
| Total | | 100 | 100 | 100 | 100 | 100 | 100 | 100 | 100 | 100 | 100 | 100 |
| Viscosity (after 1 week from production) (KU) | | 99 | 100 | 95 | 86 | 89 | 87 | 92 | 98 | 99 | 101 | 87 |

EP 3 831 898 A1

(continued)

| | Comparative Example No. | 1 | 2 | 3 | 4 | 5 | 6 | 7 | 8 | 9 | 10 | 11 |
|---|---|---|---|---|---|---|---|---|---|---|---|---|
| | Coating composition No. | Zz1 | Zz2 | Zz3 | Zz4 | Zz5 | Zz6 | Zz7 | Zz8 | Zz9 | Zz10 | Zz11 |
| VOC (g/L) | | 390 | 390 | 367 | 367 | 390 | 367 | 390 | 390 | 390 | 349 | 349 |
| * The unit for the numerals is part by mass. | | | | | | | | | | | | |

Table 6 (1/3)

| | Example No. | | 1 | 2 | 3 | 4 | 5 | 6 | 7 | 8 | 9 |
|---|---|---|---|---|---|---|---|---|---|---|---|
| | Coating composition No. | | Aa1 | Aa2 | Aa3 | Aa4 | Aa5 | Aa6 | Aa7 | Aa8 | Aa9 |
| Glossiness of coating film after coating on aged coating film (85° glossiness) | | | 0 | 0 | 0 | 1 | 1 | 1 | 1 | 0 | 0 |
| Accelerated deterioration test of coating film on aged coating film test panel (50°C) | Immersion period | 1 month | 0 | 0 | 0 | 0 | 0 | 0 | 0 | 0 | 0 |
| | | 2 months | 0 | 0 | 0 | 0 | 0 | 0 | 0 | 0 | 0 |
| | | 3 months | 0 | 0 | 0 | 0 | 0 | 0 | 0 | 0 | 0 |
| | | 4 months | 0 | 0 | 0 | 0 | 0 | 0 | 0 | 0 | 0 |
| | | 5 months | 0 | 0 | 0 | 0 | 0 | 0 | 0 | 0 | 0 |
| | | 6 months | 0 | 0 | 0 | 0 | 0 | 0 | 0 | 0 | 0 |
| Static antifouling property test on aged coating film test panel | Immersion period | 1 month | 0 | 0 | 0 | 0 | 0 | 0 | 0 | 0 | 0 |
| | | 2 months | 0 | 0 | 0 | 0 | 0 | 0 | 0 | 0 | 0 |
| | | 3 months | 0 | 0 | 0 | 0 | 0 | 0 | 0 | 0 | 0 |
| | | 4 months | 0 | 0 | 0 | 0 | 0 | 0 | 0 | 0 | 0 |
| | | 5 months | 0 | 0 | 0 | 0 | 0 | 0 | 0 | 0 | 0 |
| | | 6 months | 0 | 0 | 0 | 0.5 | 0.5 | 0.5 | 0.5 | 0 | 0 |
| | | 12 months | 0.5 | 0.5 | 0.5 | 0.5 | 0.5 | 1 | 1 | 0.5 | 0.5 |
| Static antifouling property test on epoxy coating film test panel | Immersion period | 1 month | 0 | 0 | 0 | 0 | 0 | 0 | 0 | 0 | 0 |
| | | 2 months | 0 | 0 | 0 | 0 | 0 | 0 | 0 | 0 | 0 |
| | | 3 months | 0 | 0 | 0 | 0 | 0 | 0 | 0 | 0 | 0 |
| | | 4 months | 0 | 0 | 0 | 0 | 0 | 0 | 0 | 0 | 0 |
| | | 5 months | 0 | 0 | 0 | 0 | 0 | 0 | 0 | 0 | 0 |
| | | 6 months | 0 | 0 | 0 | 0.5 | 0.5 | 0.5 | 0.5 | 0 | 0 |
| | | 12 months | 0.5 | 0.5 | 0.5 | 0.5 | 0.5 | 1 | 1 | 0.5 | 0.5 |
| Spray workability | | | C | C | C | C | C | C | C | C | D |

Table 6 (2/3)

| | | | 10 | 11 | 12 | 13 | 14 | 15 | 16 | 17 | 18 |
|---|---|---|---|---|---|---|---|---|---|---|---|---|
| | Example No. | | 10 | 11 | 12 | 13 | 14 | 15 | 16 | 17 | 18 |
| | Coating composition No. | | Aa10 | Aa11 | Aa12 | Aa13 | Aa14 | Aa15 | Aa16 | Aa17 | Aa18 |
| Glossiness of coating film after coating on aged coating film (85° glossiness) | | | 0 | 0 | 0 | 0 | 1 | 1 | 0 | 0 | 0 |
| Accelerated deterioration test of coating film on aged coating film test panel (50°C) | Immersion period | 1 month | 0 | 0 | 0 | 0 | 0 | 0 | 0 | 0 | 0 |
| | | 2 months | 0 | 0 | 0 | 0 | 0 | 0 | 0 | 0 | 0 |
| | | 3 months | 0 | 0 | 0 | 0 | 0 | 0 | 0 | 0 | 0 |
| | | 4 months | 0 | 0 | 0 | 0 | 0 | 0 | 1 | 1 | 1 |
| | | 5 months | 0 | 0 | 0 | 0 | 0 | 0 | 1 | 1 | 1 |
| | | 6 months | 0 | 0 | 0 | 0 | 1 | 0 | 2 | 2 | 2 |
| Static antifouling property test on aged coating film test panel | Immersion period | 1 month | 0 | 0 | 0 | 0 | 0 | 0 | 0 | 0 | 0 |
| | | 2 months | 0 | 0 | 0 | 0 | 0 | 0 | 0 | 0 | 0 |
| | | 3 months | 0 | 0 | 0 | 0 | 0 | 0 | 0 | 0 | 0 |
| | | 4 months | 0 | 0 | 0 | 0 | 0 | 0 | 0 | 0 | 0 |
| | | 5 months | 0 | 0 | 0 | 0 | 0 | 0 | 0 | 0 | 0 |
| | | 6 months | 0 | 0 | 0 | 0 | 0 | 0 | 0 | 0 | 0 |
| | | 12 months | 0.5 | 0.5 | 0.5 | 0.5 | 0.5 | 0.5 | 0 | 0 | 0 |
| Static antifouling property test on epoxy coating film test panel | Immersion period | 1 month | 0 | 0 | 0 | 0 | 0 | 0 | 0 | 0 | 0 |
| | | 2 months | 0 | 0 | 0 | 0 | 0 | 0 | 0 | 0 | 0 |
| | | 3 months | 0 | 0 | 0 | 0 | 0 | 0 | 0 | 0 | 0 |
| | | 4 months | 0 | 0 | 0 | 0 | 0 | 0 | 0 | 0 | 0 |
| | | 5 months | 0 | 0 | 0 | 0 | 0 | 0 | 0 | 0 | 0 |
| | | 6 months | 0 | 0 | 0 | 0 | 0 | 0 | 0 | 0 | 0 |
| | | 12 months | 0.5 | 0.5 | 0.5 | 0.5 | 0.5 | 0.5 | 0 | 0 | 0 |
| Spray workability | | | C | C | c | c | c | c | c | c | c |

EP 3 831 898 A1

Table 6 (3/3)

| | | | 19 | 20 | 21 | 22 | 23 | 24 | 25 | 26 | 27 | 28 |
|---|---|---|---|---|---|---|---|---|---|---|---|---|
| | Example No. | | 19 | 20 | 21 | 22 | 23 | 24 | 25 | 26 | 27 | 28 |
| | Coating composition No. | | Aa19 | Aa20 | Aa21 | Aa22 | Aa23 | Aa24 | Aa25 | Aa26 | Aa27 | Aa28 |
| Glossiness of coating film after coating on aged coating film (85° glossiness) | | | 0 | 0 | 0 | 0 | 0 | 1 | 0 | 0 | 0 | 0 |
| Accelerated deterioration test of coating film on aged coating film test panel (50°C) | Immersion period | 1 month | 0 | 0 | 0 | 0 | 0 | 0 | 0 | 0 | 0 | 0 |
| | | 2 months | 0 | 0 | 0 | 0 | 0 | 0 | 0 | 0 | 0 | 0 |
| | | 3 months | 0 | 0 | 0 | 0 | 0 | 0 | 0 | 0 | 0 | 0 |
| | | 4 months | 0 | 0 | 0 | 0 | 0 | 0 | 0 | 0 | 0 | 0 |
| | | 5 months | 0 | 0 | 0 | 0 | 1 | 1 | 0 | 1 | 0 | 0 |
| | | 6 months | 1 | 0 | 1 | 1 | 1 | 1 | 0 | 1 | 0 | 1 |
| Static antifouling property test on aged coating film test panel | Immersion period | 1 month | 0 | 0 | 0 | 0 | 0 | 0 | 0 | 0 | 0 | 0 |
| | | 2 months | 0 | 0 | 0 | 0 | 0 | 0 | 0 | 0 | 0 | 0 |
| | | 3 months | 0 | 0 | 0 | 0 | 0 | 0 | 0 | 0 | 0 | 0 |
| | | 4 months | 0 | 0 | 0 | 0 | 0 | 0 | 0 | 0 | 0 | 0 |
| | | 5 months | 0 | 0 | 0 | 0 | 0 | 0 | 0 | 0 | 0 | 0 |
| | | 6 months | 0 | 0 | 0 | 0 | 0 | 0.5 | 0 | 0 | 0 | 0 |
| | | 12 months | 0 | 0.5 | 0 | 0 | 0 | 1 | 0.5 | 0 | 0.5 | 0 |
| Static antifouling property test on epoxy coating film test panel | Immersion period | 1 month | 0 | 0 | 0 | 0 | 0 | 0 | 0 | 0 | 0 | 0 |
| | | 2 months | 0 | 0 | 0 | 0 | 0 | 0 | 0 | 0 | 0 | 0 |
| | | 3 months | 0 | 0 | 0 | 0 | 0 | 0 | 0 | 0 | 0 | 0 |
| | | 4 months | 0 | 0 | 0 | 0 | 0 | 0 | 0 | 0 | 0 | 0 |
| | | 5 months | 0 | 0 | 0 | 0 | 0 | 0 | 0 | 0 | 0 | 0 |
| | | 6 months | 0 | 0 | 0 | 0 | 0 | 0.5 | 0 | 0 | 0 | 0 |
| | | 12 months | 0 | 0.5 | 0 | 0 | 0 | 1 | 0.5 | 0 | 0.5 | 0 |
| Spray workability | | | A | A | A | A | A | C | A | A | B | B |

EP 3 831 898 A1

Table 7

| | | | 1 | 2 | 3 | 4 | 5 | 6 | 7 | 8 | 9 | 10 | 11 |
|---|---|---|---|---|---|---|---|---|---|---|---|---|---|---|
| | | Comparative Example No. | 1 | 2 | 3 | 4 | 5 | 6 | 7 | 8 | 9 | 10 | 11 |
| | | Coating composition No. | Zz1 | Zz2 | Zz3 | Zz4 | Zz5 | Zz6 | Zz7 | Zz8 | Zz9 | Zz10 | Zz11 |
| Glossiness of coating film after coating on aged coating film (85° glossiness) | | | 4 | 4 | 2 | 2 | 4 | 2 | 0 | 4 | 4 | 0 | 0 |
| Accelerated deterioration test of coating film on aged coating film test panel (50°C) | Immersion period | 1 month | 0 | 0 | 0 | 0 | 0 | 0 | 1 | 0 | 0 | 2 | 3 |
| | | 2 months | 0 | 0 | 1 | 0 | 0 | 1 | 2 | 0 | 0 | 3 | 3 |
| | | 3 months | 0 | 1 | 2 | 1 | 1 | 1 | 3 | 0 | 1 | 3 | 3 |
| | | 4 months | 1 | 2 | 2 | 2 | 1 | 2 | 3 | 1 | 2 | 3 | 3 |
| | | 5 months | 1 | 3 | 3 | 2 | 2 | 2 | 3 | 1 | 3 | 3 | 3 |
| | | 6 months | 2 | 3 | 3 | 3 | 3 | 3 | 3 | 2 | 3 | 3 | 3 |
| Static antifouling property test on aged coating film test panel | Immersion period | 1 month | 0 | 0 | 0 | 0 | 0 | 0 | 0 | 0 | 0 | 0 | 0 |
| | | 2 months | 0 | 0 | 0 | 0 | 0 | 0 | 0 | 0 | 0 | 0 | 0 |
| | | 3 months | 0 | 0 | 0 | 0 | 0 | 0 | 0 | 0 | 0 | 0 | 0 |
| | | 4 months | 0.5 | 0.5 | 0 | 0 | 0.5 | 0 | 0 | 0.5 | 0.5 | 0 | 0 |
| | | 5 months | 0.5 | 1 | 0 | 0 | 0.5 | 0 | 0.5 | 0.5 | 1 | 0 | 0 |
| | | 6 months | 0.5 | 2 | 0.5 | 0 | 0.5 | 0.5 | 0.5 | 0.5 | 2 | 0 | 0 |
| | | 12 months | 1 | 3 | 1 | 0.5 | 1 | 1 | 1 | 1 | 3 | 0 | 0 |
| Static antifouling property test on epoxy coating film test panel | Immersion period | 1 month | 0 | 0 | 0 | 0 | 0 | 0 | 0 | 0 | 0 | 0 | 0 |
| | | 2 months | 0 | 0 | 0 | 0 | 0 | 0 | 0 | 0 | 0 | 0 | 0 |
| | | 3 months | 0 | 0 | 0 | 0 | 0 | 0 | 0 | 0 | 0 | 0 | 0 |
| | | 4 months | 0.5 | 0.5 | 0 | 0 | 0.5 | 0 | 0 | 0.5 | 0.5 | 0 | 0 |
| | | 5 months | 0.5 | 1 | 0 | 0 | 0.5 | 0 | 0.5 | 0.5 | 1 | 0 | 0 |
| | | 6 months | 0.5 | 2 | 0.5 | 0 | 0.5 | 0.5 | 0.5 | 0.5 | 2 | 0 | 0 |
| | | 12 months | 1 | 3 | 1 | 0.5 | 1 | 1 | 1 | 1 | 3 | 0 | 0 |
| Spray workability | | | C | C | C | A | A | A | C | c | c | c | A |

As apparent from the results of Examples and Comparative Examples, it is understood that the present invention can provide an antifouling coating composition capable of forming an antifouling coating film that can retain the appearance demanded for the coating film and is excellent in long-term antifouling property even though the antifouling coating composition is coated directly on an aged antifouling coating film including a fragile layer, from which the antifouling agent component has been eluted due to the long-term exposure to water. The present invention can also provide a substrate with an antifouling coating film that exhibits excellent appearance (glossiness) and antifouling property.

**Claims**

1.   An antifouling coating composition comprising a silyl ester copolymer (A) and a rosin compound and/or a monocarboxylic acid compound (B),
the silyl ester copolymer (A) having a solid content acid value of 0.1 to 10 mgKOH/g,
the silyl ester copolymer (A) having a constitutional unit derived from triisopropylsilyl methacrylate (a1) and a constitutional unit derived from an ethylenically unsaturated monomer other than triisopropylsilyl methacrylate (a1),
a content of the rosin compound and/or monocarboxylic acid compound (B) being 100 parts by mass or less per 100 parts by mass of the solid content of the silyl ester copolymer (A).

2.   The antifouling coating composition according to claim 1, wherein a content of the constitutional unit derived from triisopropylsilyl methacrylate (a1) is 35 to 75 parts by mass per 100 parts by mass of the total constitutional units of the silyl ester copolymer (A).

3.   The antifouling coating composition according to claim 1 or 2, wherein the silyl ester copolymer (A) has a constitutional unit derived from 2-methoxyethyl (meth)acrylate (a2) and a constitutional unit derived from an additional ethylenically unsaturated monomer (a3).

4.   The antifouling coating composition according to claim 3, wherein a content of the constitutional unit derived from 2-methoxyethyl (meth)acrylate (a2) is 15 to 35 parts by mass per 100 parts by mass of the total constitutional units of the silyl ester copolymer (A).

5.   The antifouling coating composition according to claim 3 or 4, wherein the additional ethylenically unsaturated monomer (a3) includes a monomer containing an acid group.

6.   The antifouling coating composition according to any one of claims 1 to 5, wherein the silyl ester copolymer (A) has a weight average molecular weight (Mw) of 12,000 or more.

7.   The antifouling coating composition according to any one of claims 1 to 6, wherein the antifouling coating composition comprises copper or a copper compound (C), and a content of the copper or copper compound (C) in the solid content of the antifouling coating composition is 50% by mass or more.

8.   The antifouling coating composition according to any one of claims 1 to 7, wherein the antifouling coating composition comprises a dehydrating agent (L), and the dehydrating agent (L) is an alkoxysilane compound.

9.   The antifouling coating composition according to any one of claims 1 to 8, wherein the silyl ester copolymer (A) has a weight average molecular weight (Mw) of 12,000 or more and 25,000 or less.

10.   The antifouling coating composition according to any one of claims 1 to 9, wherein the antifouling coating composition is an antifouling coating composition for repairing an aged antifouling coating film that is for repairing an aged antifouling coating film.

11.   An antifouling coating film formed with the antifouling coating composition according to any one of claims 1 to 10.

12.   A laminated antifouling coating film comprising an aged antifouling coating film or an epoxy coating film (X), and an antifouling coating film (Y) formed with an antifouling coating composition (y), laminated on each other,
the antifouling coating composition (y) containing a silyl ester copolymer (A),
the silyl ester copolymer (A) having a solid content acid value of 0.1 to 10 mgKOH/g,
the silyl ester copolymer (A) having a constitutional unit derived from triisopropylsilyl methacrylate (a1) and a constitutional unit derived from an ethylenically unsaturated monomer other than triisopropylsilyl methacrylate.

13. A substrate with an antifouling coating film, comprising a substrate having provided on a surface of the substrate the antifouling coating film according to claim 11 or the laminated antifouling coating film according to claim 12.

14. The substrate with an antifouling coating film according to the claim 13, wherein the substrate has provided on the surface of the substrate an aged antifouling coating film, and the antifouling coating film provided on the aged antifouling coating film.

15. A method for producing a substrate with an antifouling coating film, comprising the following steps (1-1) and (1-2), or the following steps (2-1) and (2-2):

(1-1) a step of coating or impregnating a surface of a substrate with the antifouling coating composition according to any one of claims 1 to 10, so as to provide a coated material or an impregnated material,
(1-2) a step of drying the coated material or the impregnated material obtained in the step (1-1), so as to provide an antifouling coating film,
(2-1) a step of drying the antifouling coating composition according to any one of claims 1 to 10, so as to provide an antifouling coating film, and
(2-2) a step of adhering the antifouling coating film obtained in the step (2-1) to a substrate.

16. The method for producing a substrate with an antifouling coating film according to claim 15, wherein the step (1-1) is a step of coating or impregnating a surface of a substrate having on a surface thereof an aged antifouling coating film, with the antifouling coating composition, so as to provide a coated material or an impregnated material, and the step (2-2) is a step of adhering the antifouling coating film obtained in the step (2-1) on a substrate having on a surface thereof an aged antifouling coating film.

17. A repair method of an aged antifouling coating film, comprising forming the antifouling coating film according to claim 11 on the aged antifouling coating film.

## INTERNATIONAL SEARCH REPORT

| International application No. |
|---|
| PCT/JP2019/029220 |

**A. CLASSIFICATION OF SUBJECT MATTER**
Int.Cl. C09D143/04(2006.01)i, B05D5/00(2006.01)i, B05D7/24(2006.01)i,
B32B27/00(2006.01)i, B32B27/30(2006.01)i, C09D5/16(2006.01)i,
C09D133/14(2006.01)i

According to International Patent Classification (IPC) or to both national classification and IPC

**B. FIELDS SEARCHED**

Minimum documentation searched (classification system followed by classification symbols)
Int.Cl. C09D143/04, B05D5/00, B05D7/24, B32B27/00, B32B27/30, C09D5/16,
C09D133/14

Documentation searched other than minimum documentation to the extent that such documents are included in the fields searched
Published examined utility model applications of Japan 1922–1996
Published unexamined utility model applications of Japan 1971–2019
Registered utility model specifications of Japan 1996–2019
Published registered utility model applications of Japan 1994–2019

Electronic data base consulted during the international search (name of data base and, where practicable, search terms used)
CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 11-263937 A (NIPPON OIL & FATS CO., LTD.) 28 September 1999, claims, paragraphs [0008]-[0009], [0017]-[0018], [0038]-[0048], tables 1-3 (Family: none) | 1-17<br>1-17 |
| X<br>Y | JP 2003-176443 A (NIPPON YUSHI BASF COATINGS KK.) 24 June 2003, claims, paragraphs [0050]-[0092], tables 1, 5, 9 & US 5795374 A, claims, examples, tables 1, 5, 9 & EP 802243 A2 & KR 10-2006-0086501 A & CN 1167797 A | 1-17<br>1-17 |

☒ Further documents are listed in the continuation of Box C.    ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 08 October 2019 (08.10.2019) | 29 October 2019 (29.10.2019) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

**INTERNATIONAL SEARCH REPORT**

| International application No. |
|---|
| PCT/JP2019/029220 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>Y | JP 2010-532402 A (JOTUN A/S) 07 October 2010, claims, paragraphs [0080]-[0110], tables 2, 5-7 & US 2010/0183540 A1, claims, examples, table 2, 5-7 & WO 2009/007276 A1 & KR 10-2010-0058458 A & CN 101730713 A | 1-17<br>1-17 |
| Y | JP 2000-017203 A (NITTOH CHEMICAL CO,. LTD.) 18 January 2000, claims, paragraphs [0014], [0020], [0035]-[0038], tables 1-2 (Family: none) | 1-17 |
| P, X | JP 6472562 B1 (NIPPON PAINT MARINE COATINGS CO., LTD.) 20 February 2019, claims, paragraphs [0049]-[0097], tables 1-2, 4-5 (Family: none) | 1-17 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1146808 A
- JP 10030071 A
- JP 2001226440 A
- JP 2011026357 A
- JP 2016216651 A
- WO 2014010702 A
- JP 2013129724 A
- WO 2018087846 A